# EUROPEAN PATENT APPLICATION

(11) **EP 4 460 119 A1**
(43) Date of publication of application: **06.11.2024**
(21) Application number: 22918435.3
(22) Date of filing: 26.12.2022
(51) Int. Cl.: H04W 64/00

(54) **COMMUNICATION METHOD AND COMMUNICATION APPARATUS**

(30) Priority: 07.01.2022 CN 202210016672
(71) Applicant: Huawei Technologies Co., Ltd., Shenzhen, Guangdong 518129 (CN)
(72) Inventor: JIA, Jianxin, Shenzhen, Guangdong 518129 (CN); WU, Wenfu, Shenzhen, Guangdong 518129 (CN); ZONG, Zaifeng, Shenzhen, Guangdong 518129 (CN)
(74) Representative: Gill Jennings & Every LLP
(86) International application number: PCT/CN2022/141861
(87) International publication number: WO 2023/130992

(57) **Abstract**

Embodiments of this application provide a communication method and a communication apparatus. In the communication method, a first device sends a first message to an access management network element. The first device is used for positioning measurement, and the first message includes second information indicating a capability of the first device. Further, the access management network element sends a second message to a network storage network element. The second message includes first information. The first information indicates that the first device exists in the access management network element, is used to register information about the first device with the network storage network element, or indicates that a type of a network function is the first device. On this basis, the network storage network element receives a fourth message that is sent by a second network element and that is used to discover the access management network element or the first device. In this method, the first device can be effectively selected to perform the positioning measurement, and a measurement result is combined with measurement results of a base station, a satellite, and the like, so that accuracy of a positioning measurement result for a positioned device can be improved.

## Description

This application claims priority to Chinese Patent Application No. 202210016672.6, filed with the China National Intellectual Property Administration on January 7, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

With rise of the wave of intelligence, vertical industries have an increasingly urgent requirement for positioning. A positioning function of a 5G base station was introduced in the 3rd generation partnership project (3rd generation partnership project, 3GPP) Release 16 that was frozen in June 2020. Application scenarios thereof are mainly classified into two types: a wide area positioning scenario and a local area positioning scenario. In the wide area scenario, typical scenarios include a smart IoT (for example, older adult positioning and pet tracking) and smart policing (for example, firefighter safety positioning, 110/119 alarm reporter positioning, and police car positioning). In the local area positioning scenario, typical scenarios include smart manufacturing (for example, personnel location management and material location management), smart chemical engineering (for example, personnel location management, an electronic fence, and one-button reporting), and smart shopping malls and supermarkets (for example, product push and smart operation, customer flow analysis and mall management, navigation and guided selling, and parking and car searching).

To improve positioning accuracy in the foregoing scenarios, the industry proposes to enhance the positioning accuracy by using a positioning reference unit. However, how to use a proper positioning reference unit is not known.

### SUMMARY

In view of this, embodiments of this application provide a communication method and a communication apparatus, to improve accuracy of location measurement.

In this application, a second device may be a positioned device (UE being positioned), a device that is being positioned, a to-be-positioned device, a target device (target UE), or the like.

In this application, a "network element" may be replaced with a network function instance (network function instance), a network function (network function), a network functional entity, or the like. This is not limited in this application.

According to a first aspect, a communication method is provided. The method includes: An access management network element obtains information about a first device. The access management network element sends a second message to a network storage network element. The second message includes or carries first information. The first information indicates (indicate), notifies (notify/inform), represents (represent), or expresses that the first device exists in the access management network element, the first information is used to register (register) the information about the first device with the network storage network element or configure (configure) the information about the first device or the network storage network element, or the first information indicates that a type of a network function is the first device. The first device is used for positioning measurement.

Optionally, the second message further includes a relationship between the access management network element and the first device.

Optionally, the relationship between the access management network element and the first device may include one or more of the following:
an identifier of the access management network element and an identifier of one or more first devices; a relationship between the identifier of the access management network element and the identifier of the one or more first devices; information about the access management network element and information about the one or more first devices; the identifier of the one or more first devices; and the information about the one or more first devices, where for specific descriptions of the identifier of the access management network element, the first device, the information about the first device, and the identifier of the first device, refer to corresponding locations below.

In addition, the relationship between the access management network element and the first device may further include another relationship other than the foregoing relationship. This is not limited in this application.

It should be understood that, that an access management network element obtains information about a first device may be replaced with any one or more of the following descriptions. This is not limited in this application.

The access management network element receives a capability or capability information of the first device.

The access management network element obtains a capability or capability information of the first device.

The access management network element receives a first message sent by the first device. The first message includes one or more of a registration request, a service request, and uplink non-access stratum transport.

The access management network element receives a first message sent by the first device. The first message may be any message included in the first message described in this specification, or may be another message. This is not limited in this application.

The access management network element receives a first message sent by the first device. The first message carries the information about the first device. The first message may be any message included in the first message described in this specification, or may be another message. This is not limited in this application.

The access management network element receives a first message sent by the first device. The first message includes one or more of a registration request, a service request, and uplink non-access stratum transport. The first message further includes second information. The second information indicates a capability of the first device.

The access management network element receives a first message sent by the first device. The first message may be any message included in the first message described in this specification, or may be another message. This is not limited in this application. The first message further includes second information. The second information indicates a capability of the first device.

The access management network element receives a first message sent by the first device. The first message includes one or more of a registration request, a service request, and uplink non-access stratum transport. The first message further includes second information. The second information indicates a capability of the first device. The first message further includes location information of the first device.

The access management network element receives a first message sent by the first device. The first message may be any message included in the first message described in this specification, or may be another message. This is not limited in this application. The first message further includes second information. The second information indicates a capability of the first device. The first message further includes location information of the first device.

The access management network element obtains one or more first devices from a unified data management network element (UDM). The obtaining one or more first devices may be obtaining information about the one or more first devices.

The access management network element receives one or more first devices from a unified data management network element. The receiving one or more first devices from a unified data management network element may be receiving information about the one or more first devices.

The information about the first device is configured on the access management network element. It should be understood that configuration of the information about the first device on the access management network element may be implemented through an operation, administration, and management (operation, administration, and maintenance, OAM) configuration, an operator configuration, a pre-configuration, or the like. This is not limited. In conclusion, the information about the first device may be configured on the access management network element.

The access management network element obtains the information about the first device through the configuration. It should be understood that obtaining the information about the first device by the access management network element through the configuration may be obtaining the information about the first device through the OAM configuration, the operator configuration, the pre-configuration, or the like. This is not limited.

It should be understood that the information about the first device may include one or more of the following: identification information of the first device, a part or all of registration information of the first device, a part or all of subscription information of the first device, a part or all of network function configuration information (NF profile) of the first device, a part or all of configuration information (profile) of the first device, a part or all of a context of the first device, the capability of the first device, the capability information of the first device, the location information of the first device, information about a reference area of the first device, and the like. This is not limited. In conclusion, all of them may be information that can be used to express the first device.

Optionally, "obtain (acquire/get/obtain)" may be replaced with "acquire", "get", "extract", or "take". It should be understood that, that the first device exists in the access management network element may be that information about the first device exists in the access management network element. The information about the first device may include one or more of the following: the identification information of the first device, a part or all of the registration information of the first device, a part or all of the subscription information of the first device, a part or all of the network function configuration information (NF profile) of the first device, a part or all of the configuration information (profile) of the first device, related information of the first device, and the like. This is not limited. In conclusion, all of them may be information that can be used to express the first device.

Optionally, the second message further includes a network function update request (Nnrf_NFManagement_NFUpdate Request) or a network function registration request (Nnrf_NFManagement_NFRegister Request).

It should be understood that in this application, the access management network element may be an access and mobility management function (access and mobility management function, AMF) network element, or may be another network element having a same or similar function. The name is not limited in this application. The network storage network element may be a network repository function (network repository function, NRF) network element, or may be another network element having a same or similar function. The name is not limited in this application.

It should be understood that in this application, a location management network element may be a location management function (location management function, LMF) network element, a location server (location server), or an evolved location management function (evolved LMF, eLMF) network element, or may be another network element having a same or similar function. The name is not limited in this application.

It should be understood that in this application, the first device may be replaced with any one or more of the following words. The name is not limited, but all the words may have a same or related function. In addition, the following one or more words may be replaced with each other. In addition, all other first devices in this application may be replaced in this way. In addition, the first device may be replaced with a device name that may appear in the future and that has a function the same as or similar to that of the first device. A unified description is provided herein. When the first device appears in a subsequent embodiment, for brevity, details are not described again. The any one or more words are as follows:
a positioning reference device (positioning reference device); a reference device (reference device); reference user equipment (reference UE); a reference node (reference node), where the reference node may include the reference user equipment or a reference access network device (the reference node can be either a gNB or UE); a reference transmission reception point (reference transmission reception point, reference TRP); a correction device (correction device) or correction user equipment (correction UE); calibration user equipment (calibration UE); a calibration device (calibration device); a reference point (reference point); a positioning reference unit (positioning reference unit, PRU); a positioning reference device (positioning reference device, PRD) or a differential device (differential device); a differential unit (differential unit); a positioning differential device (positioning differential device, PDD); a positioning differential unit (positioning differential unit, PDU) or a correction point (correction point); a calibration point (calibration UE); and the like.

Optionally, in this application, the first device may be used for positioning measurement. That the first device may be used for positioning measurement may be understood as that the first device may be used for one or more operations: positioning measurement, positioning computation, location measurement, location estimation, location computation, and positioning estimation. Specifically, this may mean that the first device has the following functions.
1. The first device may measure a downlink positioning reference signal and report (report) related measurement information to the location management network element, where the location management network element may be a location management function network element LMF (Measure DL PRS (downlink positioning reference signal) and report associated measurements to the LMF).
   The reported related measurement information may include, for example, a reference signal time difference (reference signal time difference, RSTD), a receive-transmit time difference (Rx-Tx time difference), and reference signal received power (reference signal received power, RSRP).
2. The first device may send a sounding reference signal (sounding reference signal, SRS) to an access network device (for example, a gNB or an eNB) or a part (for example, a transmission reception point (transmission reception point, TRP)) of the access network device, to enable the access network device or the part of the access network device to measure and report measurement information related to the positioning reference device to the location management network element. The location management network element may be a location management function network element. The reported related measurement information may include, for example, relative time of arrival (relative time of arrival, RTOA), the receive-transmit time difference (Rx-Tx time difference), and an angle of arrival (angle of arrival, AoA).

The first device may be user equipment (UE) and/or an access network device and/or a part (for example, an NG-RAN, an E-UTRAN, a gNB, an eNB, a central unit (central unit, CU), a distributed unit (distributed unit, DU), or a transmission reception point (transmission reception point, TRP)) of the access network device.

A device (for example, the first device or the second device) may have known location information, and the location information may be preconfigured, for example, may be geographic coordinate information (the location of the reference UE may be some predefined or fixed geographic coordinate point). For another example, the location information may be location information obtained (obtained) by using one or more different positioning methods (positioning methods) or positioning techniques (positioning techniques), such as a global navigation satellite system (global navigation satellite system, GNSS), real-time kinematic (real-time kinematic, RTK), a lidar (light detection and ranging, LIDAR), an observed time difference of arrival (observed time difference of arrival, OTDOA), an uplink time difference of arrival (uplink time difference of arrival, UL-TDOA), a downlink time difference of arrival (downlink time difference of arrival, DL-TDOA), an uplink angle of arrival (uplink angle of arrival, UL-AoA), a downlink angle of departure (downlink angle of departure, DL-AoD), a WLAN-based positioning method (WLAN-based positioning), a Bluetooth-based positioning method (Bluetooth-based positioning), multi-round trip time (multi-round trip time, Multi-RTT), a time difference of arrival (time difference of arrival, TDOA), an enhanced cell identification (enhanced cell ID, ECID), terrestrial beacon system positioning (terrestrial beacon system positioning, TBS positioning), and sensor-based positioning (sensor-based positioning). The location information of the first device may be reported (report) to the location management network element (for example, the LMF).

3. The first device may report (report) antenna orientation information to the location management network element (for example, the LMF) (If the antenna orientation information of the PRU is known, the information may also be requested by the LMF).

4. The first device may be used for timing errors estimation and compensation (timing errors estimation and compensation). Alternatively, the positioning reference device may be configured to mitigate a receive/transmit timing error (can help mitigate the Rx/Tx timing error). Alternatively, the first device may be configured to calculate a receive/transmit timing error difference (can be used to calculate the Rx/Tx timing error difference). Alternatively, the first device may be used for assisted calibration (assisted calibration). Alternatively, the first device may be configured to assist in generating calibration information (calibration information)/correction information (correction information)/differential information (differential information). Alternatively, the first device may generate the calibration information (calibration information)/correction information (correction information)/differential information (differential information). Alternatively, the first device may be configured to assist in generating timing calibration information (timing calibration information)/timing correction information (timing correction information)/timing differential information (timing differential information). Alternatively, the first device may generate the timing calibration information (timing calibration information)/timing correction information (timing correction information)/timing differential information (timing differential information). Alternatively, the first device may estimate and correct an effective timing error to support timing calibration (In order to estimate and correct the effective timing error, support in R-17 timing calibration, using reference points(UE/gNB) with precise location information known to the network). Alternatively, the first device assists another UE, first device, or location management network element in generating correction terms (correction terms), to assist the another UE, first device, or location management network element in correcting a positioning measurement result or a positioning computation result (The location measurements for other UEs can then be corrected based on the previously determined correction terms). Alternatively, the first device may mitigate and calibrate the timing errors (mitigate and calibrate the timing errors). Alternatively, the first device may be configured to improve positioning performance or positioning accuracy of an angle-based positioning method (angle-based positioning method). The angle-based positioning method may include the uplink angle of arrival (UL-AoA) positioning method and the downlink angle of departure (DL-AoD) positioning method that are described above.

5. The first device may be used for or support a user equipment-assisted positioning (UE-assisted positioning) method. Alternatively, the first device may be used for or support a user equipment-based positioning (UE-based positioning) method. Alternatively, the first device may be used for or support a network-based positioning (network-based positioning) method. The UE-assisted positioning may be understood as that the first device reports the measurement information to assist the LMF in computing a final positioning result. The UE-based positioning may be understood as that the first device computes a final positioning result based on assisted measurement information provided by a network (for example, the access network device or the another UE, first device, or LMF) and/or the measurement information obtained by the first device. The network-based positioning may be understood as that the network (for example, the LMF) computes a final positioning result based on the measurement information provided by the access network device and/or the UE and/or the first device.

6. The first device may be used for positioning measurement (positioning measurement), positioning estimation (positioning estimate), positioning computation (positioning computation), location computation (Location computation), location measurement (location measurement), location estimation (location estimate), or measurement (measurement).

In embodiments of this application, the access management network element may send, to the network storage network element, the first device that can be used for positioning measurement or the information about the first device. When a device that needs to be positioned has a positioning requirement, a second network element (which may be an access and mobility management function network element AMF, or may be a location management function network element LMF) can obtain, by interacting with the network storage network element, the first device that can be used for positioning measurement or the information about the first device. In this way, when positioning is performed on the second device, the positioning is based on both location measurement results of a 5G base station, a satellite, and the like for the second device and a location measurement result of the first device that can be used for positioning measurement, so that accuracy of a final location measurement result for the second device can be improved.

With reference to the first aspect, in some implementations of the first aspect, the method further includes: The access management network element receives the first message sent by the first device. The first message includes one or more of a registration request (registration request), a service request (service request), and uplink non-access stratum transport (UL NAS (non-access stratum) transport).

Optionally, the first message may further include at least one of the following messages:
registration complete (registration complete), deregistration accept (deregistration accept), deregistration request (deregistration request), service reject (service reject), service accept (service accept), control plane service request (control plane service request), uplink non-access stratum transport (UL NAS transport), mobile originated location request (mobile originated location request, MO-LR), authentication response (authentication response), authentication failure (authentication failure), configuration update complete (configuration update complete), identity response (identity response), notification response (notification response), security mode complete (security mode complete), security mode reject (security mode reject), security protected 5G non-access stratum message (security protected 5GS NAS message), 5G mobility management status (5G mobility management status, 5GMM status), network slice-specific authentication complete (network slice-specific authentication complete), LPP protocol data unit (LTE positioning protocol packet data unit, LPP PDU), NR protocol data unit (NR positioning protocol packet data unit, NPP PDU/NRPP PDU), LPP message (LPP message), request capabilities (request capabilities), provide capabilities (provide capabilities), request assistance data (request assistance data), provide assistance data (provide assistance data), request location information (request location information), provide location information (provide location information), LPP request or provide location information message (LPP request/provide location information message), LPP capability transfer (LPP capability transfer), LPP request or provide assistance data message (LPP request/provide assistance data message), LPP request or provide capability message (LPP request/provide capability message), LPP procedure (LPP procedure), LPP capability transfer (LPP capability transfer), NR message (NR message), NR request or provide location information message (NR request/provide location information message), NR capability transfer (NR capability transfer), NR request or provide assistance data message (NR request/provide assistance data message), NR request or provide capability message (NR request/provide capability message), NR procedure (NR procedure), NR capability transfer (NR capability transfer), PDU session establishment request (PDU session establishment request), PDU session modification request (PDU session modification request), PDU session release request (PDU session release request), remote UE report (remote UE report), NG setup request (NG setup request), transmission reception point information response (TRP information response), capability exchange (capability exchange), and the like.

It should be understood that the first message may further include another message other than the foregoing messages. This is not limited in this application.

In this embodiment of this application, the first device needs to send the capability of the first device to the network. In this way, the network may select a proper access management network element or first device based on the access management network element in which the first device exists or the first device, to save network resources.

With reference to the first aspect, in some implementations of the first aspect, the second message further includes the information about the reference area of the first device.

Optionally, in this application, information about a reference area of a device (for example, a to-be-positioned terminal device/a user equipment (UE) or a first device) may include, for example, at least one of the following:
information about a location area that is of the device and that is covered by an access network device serving the device, where the information about the location area may include an identifier of a cell in which the device is located and/or an identifier of the access network device; information about a location area that is of the device and that is covered by a target access network device of the device; a cell global identifier (cell global identifier, CGI); an access network device identifier; a tracking area identifier; an identifier of a public land mobile network (public land mobile network, PLMN); global positioning system (global positioning system, GPS) geographic location information; a sector identifier; a physical cell identifier (physical cell identifier, PCI); an antenna identifier; a distributed unit (distributed unit, DU) identifier; a central unit (central unit, CU) identifier; a transmission reception point (transmission reception point, TRP) identifier; and the like.

The access network device identifier may be a next generation NodeB identifier (next generation nodeB identifier, gNB ID), a next generation radio access network identifier (next generation radio access network identifier, NG-RAN ID), or the like, and the tracking area identifier may be a tracking area identifier (tracking area identifier, TAI), a tracking area code (tracking area code, TAC), or the like.

Optionally, in this application, the to-be-positioned terminal device may be a positioned device (UE being positioned), a device that is being positioned, or a target device (target UE).

Optionally, the first information specifically indicates that the access management network element includes the first device in the reference area of the first device.

In this embodiment of this application, an indication function of the first information may enable the second network element to select the first device more effectively. In this way, when a positioning requirement for the target device occurs, a proper first device is searched for based on the reference area of the target device. The second network element can effectively find the proper first device. Positioning efficiency is improved.

With reference to the first aspect, in some implementations of the first aspect, the first message further includes second information. The second information indicates (indicate)/represents/expresses (represent) the capability of the first device.

Optionally, the capability (or the capability information) of the first device indicates whether the first device can serve as a positioning reference unit or whether (whether) the device can support (support) the function of the first device.

Optionally, the capability or the capability information of the first device in this application, or the information indicating the capability of the first device or the capability information of the first device in this application may include: indicating whether the device can serve as the first device; may include: indicating that the device can serve as the first device; may include: indicating that the device cannot serve as the first device; may include: indicating whether the device can have the function of the first device; may include: indicating that the device has the function of the first device; may include: indicating that the device does not have the function of the first device; may include: indicating whether the device supports the function of the first device; may include: indicating that the device supports the function of the first device; may include: indicating that the device does not support the function of the first device; or the like. It should be understood that the function of the first device is described above, and details are not described herein again.

Alternatively, "indicate the capability of the first device" may be replaced with "indicate whether the device has the capability of the first device".

Whether the device can serve as the first device may be understood as, for example, whether the device has the function of the first device. The indication may be indicated by using a binary bit. For example, when the bit is set to 1, it represents that the device has the capability of the first device; and when the bit is set to 0, it represents that the device does not have the capability of the first device. Alternatively, when the bit is set to 0, it represents that the device has the capability of the first device; and when the bit is set to 1, it represents that the device does not have the capability of the first device. Alternatively, when the bit indicating whether the device has the capability of the first device is carried, it represents that the device has the capability of the first device; and when the bit indicating whether the device has the capability of the first device is not carried, it represents that the device does not have the capability of the first device. Alternatively, when the bit indicating whether the device has the capability of the first device is not carried, it represents that the device has the capability of the first device; and when the bit indicating whether the device has the capability of the first device is carried, it represents that the device does not have the capability of the first device. Alternatively, the indication may be indicated by carrying other related information. For example, one or more information elements (information elements, IEs) are carried to represent that the device has the capability of the first device, and the one or more information elements are not carried to represent that the device does not have the capability of the first device. Alternatively, one or more information elements are not carried to represent that the device has the capability of the first device, and the one or more information elements are carried to represent that the device does not have the capability of the first device.

Optionally, the access management network element decides/determines (determine), based on the second information, whether the first device can serve as a positioning reference unit.

Optionally, if the first device can serve as the positioning reference unit, the access management network element stores the second information into the information about the first device.

Optionally, the information about the first device may be related information of the first device, for example, may be all or a part of the registration information of the first device, may be all or a part of the subscription information of the first device, or the like.

Optionally, if the first device cannot serve as the positioning reference unit, the access management network element sends third information to the first device. The third information notifies (notify/inform) or indicates (indicate) a cause. For example, the first device cannot serve as the positioning reference unit.

It should be noted that, in a current protocol, a subject name corresponding to the positioning reference unit is not specified. In a future protocol or network architecture, any subject name that has a same or similar function as the subject name should be considered equivalent to the subject name. For example, the positioning reference unit may also be referred to as a positioning reference device, or may be any one of the foregoing replacement words of the first device. This is not limited in this application.

In this embodiment of this application, the first device needs to send the capability of the first device to the network. In this way, the network may select a proper access management network element or first device based on the first device or the access management network element in which the first device exists, to save network resources, and improve positioning accuracy of the positioned device.

With reference to the first aspect, in some implementations of the first aspect, the first message further includes the location information of the first device.

Optionally, if the access management network element determines or decides (determine/decide) that the location information of the first device meets a first condition, the access management network element stores the location information of the first device into the information about the first device.

It should be understood that the location information of the first device in this application may be geographic coordinate information configured or preconfigured by an operator (may be some predefined or fixed or preconfigured or configured geographic coordinate point), or may be location information measured, computed, or estimated by using a positioning method (positioning method or positioning technique), for example, may be location information measured, computed, or estimated by using one or more of the following positioning methods:
a global navigation satellite system (global navigation satellite system, GNSS), real-time kinematic (real-time kinematic, RTK), a radar (LIDAR), an observed time difference of arrival (observed time difference of arrival, OTDOA), an uplink time difference of arrival (uplink time difference of arrival, UL-TDOA), a downlink time difference of arrival (downlink time difference of arrival, DL-TDOA), an uplink angle of arrival (uplink angle of arrival, UL-AoA), a downlink angle of departure (downlink angle of departure, DL-AoD), a WLAN-based positioning method (WLAN-based positioning), a Bluetooth-based positioning method (Bluetooth-based positioning), multi-round trip time (multi-round trip time, Multi-RTT), a time difference of arrival (time difference of arrival, TDOA), an enhanced cell identification (enhanced cell ID, ECID), terrestrial beacon system positioning (terrestrial beacon system positioning, TBS positioning), sensor-based positioning (sensor-based positioning), and the like.

Location information of the positioning reference device may be reported (report) to the location management network element (for example, the LMF).

It should be understood that the first condition in this embodiment of this application may mean, for example, that the location information of the first device is greater than, less than, or equal to a specific value; the location information of the first device belongs to or does not belong to a range; an error between the location information of the first device and the location information in the subscription information or the preconfigured information of the first device is greater than, less than, or equal to a specific value or a specific range. This is not limited in this application.

In this embodiment of this application, before the first device is used to perform positioning measurement, the access management network element may first determine whether the first device can serve as a positioning reference unit. If the access management network element determines that the first device can serve as the positioning reference unit, the first device may be used to perform the positioning measurement. In addition, based on this, the access management network element may further decide whether the location information of the first device meets the first condition. If determining that the location information of the first device meets the first condition, the access management network element may store the location information of the first device into the information about the first device. In this way, before the first device is used to perform the positioning measurement, the first device may be registered and/or authenticated, and accuracy of the location information of the first device is verified, so that accuracy of the positioning measurement performed by using the first device can be improved.

With reference to the first aspect, in some implementations of the first aspect, the access management network element sends a third message to the second network element. The third message is used to request to obtain the location information of the first device. After obtaining the location information of the first device, the access management network element stores the location information of the first device into the information about the first device.

Optionally, the second network element may be an access and mobility management function network element AMF, or the second network element may be a location management function network element LMF.

Optionally, the third message may be a location determine request message (Nlmf_Location_DetermineLocation Request).

With reference to the first aspect, in some implementations of the first aspect, the access management network element obtains one or more first devices from a unified data management (unified data management, UDM) network element. The obtaining one or more first devices may be obtaining information about the one or more first devices. The information about the first device is described above, and details are not described herein again.

In this embodiment of this application, the access management network element may obtain latest location information of the first device by interacting with the second network element, to ensure a trustworthiness level of the location information of the first device to some extent. The access management network element may store the latest location information of the first device into the information about the first device. In this way, a trustworthiness level of a positioning measurement result is also improved.

With reference to the first aspect, in some implementations of the first aspect, the access management network element obtains one or more first devices from a unified data management network element.

With reference to the first aspect, in some implementations of the first aspect, the access management network element sends a ninth message to the first device. The ninth message is used for first device positioning measurement, or the ninth message is used to request the first device positioning measurement.

It should be understood that the first device positioning measurement may mean that the first device performs the foregoing function of the first device. This is not limited in this application.

The ninth message may include one or more of the following, and is not limited in this application:
authentication request (authentication request), authentication result (authentication result), authentication reject (authentication reject), registration accept (registration accept), registration reject (registration reject), deregistration accept (deregistration accept), service accept (service accept), service reject (service reject), configuration update command (configuration update command), identity request (identity request), notification (notification), security mode command (security mode command), security protected 5G system non-access stratum message (security protected 5GS NAS message), 5G mobility management status (5GMM status), 5G session management status (5GSM status), remote UE report response (remote UE report response), service-level authentication command (service-level authentication command), network slice-specific authentication command (network slice-specific authentication command), network slice-specific authentication result (network slice-specific authentication result), PDU session establishment accept (PDU session establishment accept), PDU session establishment reject (PDU session establishment reject), PDU session authentication command (PDU session authentication command), PDU session authentication result (PDU session authentication result), PDU session establishment response (PDU session establishment response), PDU session modification reject (PDU session modification reject), PDU session modification command (PDU session modification reject), PDU session release reject (PDU session release reject), PDU session release command (PDU session release command), PDU session release complete (PDU session release complete), downlink non-access stratum transport (DL NAS transport), LPP protocol data unit (LTE positioning protocol packet data unit, LPP PDU), NR protocol data unit (NR positioning protocol packet data unit, NPP PDU/NRPP PDU), LPP message (LPP message), request capabilities (request capabilities), provide capabilities (provide capabilities), request assistance data (request assistance data), provide assistance data (provide assistance data), request location information (request location information), provide location information (provide location information), LPP request or provide location information message (LPP request/provide location information message), LPP capability transfer (LPP capability transfer), LPP request or provide assistance data message (LPP request/provide assistance data message), LPP request or provide capability message (LPP request/provide capability message), LPP procedure (LPP procedure), LPP capability transfer (LPP capability transfer), NR message (NR message), NR request or provide location information message (NR request/provide location information message), NR capability transfer (NR capability transfer), NR request or provide assistance data message (NR request/provide assistance data message), NR request or provide capability message (NR request/provide capability message), NR procedure (NR procedure), NR capability transfer (NR capability transfer), NG setup response (NG setup response), capability exchange (capability exchange), positioning information request (positioning information request), positioning activation request (positioning activation request), measurement request (measurement request), measurement update (measurement update), measurement abort (measurement abort), and the like.

According to a second aspect, a communication method is provided. The method includes: A network storage network element receives a fourth message sent by a second network element. The fourth message is used to obtain (acquire/get/obtain), discover (find/discovery), extract (retrieval), or provide (provide) an access management network element.

Optionally, the obtaining an access management network element may be obtaining information about the access management network element, for example, a part or all of network function configuration information (network function profile, NF profile); may be, for another example, a part or all of subscription information of the access management network element; may be, for another example, a part or all of registration information of the access management network element; or the like.

Optionally, the fourth message includes fifth information, and the fifth information indicates that the access management network element is an access management network element in which a first device exists. An explanation of the existence of the first device is described above, and details are not described herein again.

Optionally, the first device includes a positioning reference unit, and may further include one or more of the foregoing replacement words of the first device. This is not limited in this application.

Optionally, the fourth message includes a network function discovery request (Nnrf_NFDiscovery_Request).

Optionally, the fourth message further includes a network function list retrieval (Nnrf_NFManagement_NFListRetrieval Request) or a network function profile retrieval (Nnrf_NFManagement_NFProfileRetrieval Request).

Optionally, the fourth message may alternatively be another message having a same function, for example, another message having a different message name but a same or similar function. This is not limited in this application.

Optionally, the network storage network element sends one or more access management network elements to the second network element. That the network storage network element sends one or more access management network elements to the second network element may mean that the network storage network element sends a feedback message of the fourth message to the second network element. The feedback message of the fourth message includes or carries the one or more access management network elements, and the first device exists in the access management network elements.

Optionally, that the network storage network element sends one or more access management network elements to the second network element may mean that the network storage network element sends a network function instance (network function instance, NF instance) of the one or more access management network elements to the second network element.

Optionally, the including or carrying the access management network elements may mean including or carrying information about the access management network elements, for example, may be related information of the access management network elements; for example, may be all or a part of network function configuration information (network function profile) of the access management network elements; for another example, may be a part or all of registration information of the access management network elements; for another example, may be a part or all of subscription information of the access management network elements; for another example, may be a part or all of configuration information of the access management network elements; for another example, may be a part or all of context information of the access management network elements; or for another example, may be other related information of the access management network elements. This is not limited in this application.

Optionally, in this application, "feedback" may be replaced with "response". This is not limited in this application.

Optionally, an access management network element of the first device includes information about the access management network element of the first device.

In this embodiment of this application, the network storage network element queries, based on information carried in the fourth message, an access management network element that needs to be discovered, and returns a query result to the second network element, so that the second network element can accurately and efficiently find the access management network element needed by positioning, to improve efficiency of positioning measurement.

With reference to the second aspect, in some implementations of the second aspect, the fourth message further includes information about a reference area of a second device. The information about the reference area is described above, and details are not described herein again.

Optionally, the second device includes the first device. The first device is described in detail above. Details are not described herein again.

Optionally, the fifth information may indicate that the access management network element is an access management network element that includes the first device in the reference area of the second device.

Optionally, the second device includes a positioned device.

In this embodiment of this application, an indication function of the fifth information may enable the second network element to select the first device more effectively. In this way, when a positioning requirement for the positioned device occurs, a proper first device is searched for based on a reference area of the positioned device. The second network element can effectively find the proper first device. Positioning efficiency is improved.

With reference to the second aspect, in some implementations of the second aspect, the method further includes: The network storage network element receives a second message sent by the access management network element. The second message includes first information. The first information indicates that the first device exists in the access management network element, the first information is used to register information about the first device with the network storage network element, or the first information indicates that a type of a network function is the first device.

It should be understood that the information about the first device is described above, and details are not described herein again.

Optionally, the first device may be configured to perform one or more operations in positioning measurement, positioning computation, location measurement, location estimation, location computation, and positioning estimation. The function of the first device is described above, and details are not described herein again.

In this embodiment of this application, the access management network element may send, to the network storage network element, the first device that can be used for positioning measurement or related information of the first device. When a device that needs to be positioned has a positioning requirement, the second network element (including an access and mobility management function network element AMF and a location management function network element LMF) can obtain, by interacting with the network storage network element, the first device that can be used for positioning measurement or the related information of the first device. In this way, when positioning is performed on the second device, the positioning is based on both location measurement results of a 5G base station, a satellite, and the like for the second device and a location measurement result of the first device that can be used for positioning measurement, so that accuracy of a final location measurement result for the second device can be improved.

According to a third aspect, a communication method is provided. The method includes: A network storage network element receives a fourth message sent by a second network element. The fourth message is used to obtain a first device.

Optionally, the fourth message includes fourth information, and the fourth information indicates that a type of a network function that needs to be obtained or discovered is the first device.

Optionally, the first device includes a positioning reference unit. The first device may further include any one or more of the foregoing replacement words, but all of them have a same or similar function.

Optionally, the fourth message includes a network function discovery request (Nnrf_NFDiscovery_Request).

Optionally, the fourth message further includes a network function list retrieval (Nnrf_NFManagement_NFListRetrieval Request) or a network function profile retrieval (Nnrf_NFManagement_NFProfileRetrieval Request).

Optionally, the fourth message may alternatively be another message having a same function, for example, another message having a different message name but a same or similar function. This is not limited in this application.

Optionally, the network storage network element sends one or more first devices to the second network element. That the network storage network element sends one or more first devices to the second network element may mean that the network storage network element sends a feedback message of the fourth message to the second network element. The feedback message of the fourth message includes or carries the one or more first devices.

Optionally, including or carrying the first devices may mean including or carrying information about the first devices. The information about the first device may be a part or all of registration information of the first device; for another example, may be a part or all of subscription information of the first device; for another example, may be a part or all of configuration information of the first device; for another example, may be a part or all of context information of the first device; or for another example, may be other related information of the first device. Details are not described herein again.

In this embodiment of this application, the network storage network element queries, based on related information carried in the fourth message, the first device that needs to be obtained, and returns a query result to the second network element, so that the second network element can accurately and efficiently find the first device needed by positioning, to improve efficiency and accuracy of positioning measurement.

With reference to the third aspect, in some implementations of the third aspect, the fourth message further includes information about a reference area of a second device.

Optionally, the fourth message further includes sixth information, and the sixth information indicates that the first device is a first device that exists in the reference area of the second device.

Optionally, the second device includes the first device. The first device is described in detail above. Details are not described herein again.

Optionally, the second device includes a positioned device.

In this embodiment of this application, the first device can be selected more effectively due to an indication function of the sixth information. In this way, when a positioning requirement occurs, the second network element can find the first device more effectively, to further improve positioning efficiency.

With reference to the third aspect, in some implementations of the third aspect, the method further includes: The network storage network element receives a second message sent by an access management network element. The second message includes first information. The first information indicates that the first device exists in the access management network element, the first information is used to register the related information of the first device with the network storage network element, or the first information indicates that a type of a network function is the first device.

Optionally, the information about the first device may be related information of the first device, for example, may be a part or all of registration information of the first device, may be a part or all of subscription information of the first device, may be a part or all of network configuration information (network profile) of the first device, or the like.

Optionally, the first device is configured to perform one or more operations in positioning measurement, positioning computation, location measurement, location estimation, location computation, and positioning estimation.

In this embodiment of this application, the access management network element may send, to the network storage network element, the first device that can be used for positioning measurement or the information about the first device. When the second device has a positioning requirement, the second network element (including an access and mobility management function network element AMF and a location management function network element LMF) can obtain, by interacting with the network storage network element, the first device that can be used for positioning measurement or the information about the first device. In this way, when positioning is performed on the second device, the positioning is based on both location measurement results of a 5G base station, a satellite, and the like for the second device and a location measurement result of the first device that can be used for positioning measurement, so that accuracy of a final location measurement result for the second device can be improved.

With reference to the third aspect, in some implementations of the third aspect, the second message further includes information about a reference area of the first device.

Optionally, the first information specifically indicates that the access management network element includes the first device in the reference area of the first device.

In this embodiment of this application, a range of the reference area in which the first device is located is more accurate due to an indication function of the first information. In this way, when a positioning requirement occurs, the access management network element can find the first device more effectively, to improve efficiency and accuracy of positioning.

According to a fourth aspect, a communication method is provided. The method includes: A first device sends a first message to an access management network element. The first message includes second information. The second information indicates a capability of the first device. The first device receives a ninth message sent by the access management network element. The ninth message is used for first device positioning measurement.

The capability of the first device is described above, and details are not described herein again. The ninth message is described in the first aspect, and details are not described herein again.

It should be understood that the first device positioning measurement may mean that the first device performs the function of the first device described in this application.

It should be noted that, in a current protocol, a subject name corresponding to a positioning reference unit is not specified. In a future protocol or network architecture, any subject name that has a same or similar function as the subject name should be considered equivalent to the subject name. For example, the positioning reference unit may also be referred to as a positioning reference device, or may be any one of the foregoing replacement words of the first device, but all have the same function.

Optionally, the first device includes the positioning reference unit.

Optionally, the first message further includes location information of the first device.

Optionally, if the first device cannot serve as the positioning reference unit, the first device receives third information sent by the access management network element. The third information notifies a cause. For example, the cause may be that the first device cannot serve as the positioning reference unit.

In this embodiment of this application, the first device needs to send the capability of the first device to a network. In this way, the network may select a proper access management network element based on an access management network element in which the first device exists, to save network resources, and improve positioning accuracy of a positioned device.

According to a fifth aspect, a communication method is provided. The method includes: A second network element sends a fourth message to a network storage network element. The fourth message is used to discover an access management network element.

Optionally, the fourth message includes fifth information, and the fifth information indicates that a first device exists in the discovered access management network element.

Optionally, the second network element receives one or more access management network elements sent by the network storage network element. That the second network element receives one or more access management network elements sent by the network storage network element may mean that the second network element receives a feedback message that is of the fourth message and that is sent by the network storage network element. The feedback message of the fourth message includes the one or more access management network elements in which the first device exists. Optionally, that the second network element receives one or more access management network elements sent by the network storage network element may mean that the second network element receives a network function instance (NF instance) that is of the one or more access management network elements and that is sent by the network storage network element.

Optionally, the one or more access management network elements sent by the network storage network element or the feedback message that is of the fourth message and that includes the one or more access management network elements may refer to information that is about the one or more access management network elements and that is from the network storage network element. The information about the access management network element may refer to related information of the access management network element, for example, may refer to all or a part of network function configuration information (network function profile, NF Profile) of the access management network element; for another example, may refer to a part or all of registration information of the access management network element; for another example, may refer to a part or all of subscription information of the access management network element; for another example, may refer to a part or all of a context of the access management network element; for another example, may refer to a part or all of configuration information of the access management network element; or for another example, may be related information of the access management network element. This is not limited in this application.

Optionally, the first device includes a positioning reference unit.

Optionally, "feedback (response)" in this application may be replaced with "response".

Optionally, the fourth message includes a network function discovery request (Nnrf_NFDiscovery_Request). The fourth message further includes a network function list retrieval (Nnrf_NFManagement_NFListRetrieval Request) or a network function profile retrieval (Nnrf_NFManagement_NFProfileRetrieval Request). Alternatively, the fourth message may be another message having a same function, for example, may be another message having a different message name but a same or similar function. This is not limited in this application.

Optionally, the method further includes: The second network element receives a fifth message. The fifth message is used to request to position a second device, is used to request to obtain location information of the second device, or is used to request to determine a location of the second device.

Optionally, the second device includes a positioned device.

Optionally, the fifth message includes a provide positioning information request (Namf_Location_ProvidePositioningInfo Request, Nlmf_Location), or the fifth message includes a location determine request (Nlmf_Location_ DetermineLocation Request).

In this embodiment of this application, the second device is positioned with assistance of the first device, so that network resources can be saved and positioning performance can be improved. In addition, the network storage network element may query, based on related information carried in the fourth message, an access management network element that needs to be obtained, and return a query result to the second network element, so that the second network element can accurately and efficiently find the access management network element needed by positioning, to improve efficiency of positioning measurement.

With reference to the fifth aspect, in some implementations of the fifth aspect, the fourth message further includes information about a reference area of the second device.

Optionally, the fifth information specifically indicates that the access management network element is an access management network element that includes the first device in the reference area of the second device.

In this embodiment of this application, a range of a reference area of the access management network element in which the first device exists is more accurate due to an indication function of the fifth information. In this way, when a positioning requirement occurs, the second network element can more effectively find the access management network element in which the first device exists, to more effectively find the first device. Efficiency and accuracy of positioning are further improved.

According to a sixth aspect, a communication method is provided. The method includes: A second network element sends a fourth message to a network storage network element. The fourth message is used to obtain a first device.

Optionally, the fourth message includes fourth information, and the fourth information indicates that a type of a discovered network function is the first device.

Optionally, the first device includes a positioning reference unit.

Optionally, the fourth message includes one or more of a network function discovery request (Nnrf_NFDiscovery_Request), a network function list retrieval (Nnrf_NFManagement_NFListRetrieval Request), and a network function profile retrieval (Nnrf_NFManagement_NFProfileRetrieval Request). Alternatively, the fourth message may be another message having a same function, for example, may be another message having a different message name but a same or similar function. This is not limited in this application.

Optionally, the method further includes: The second network element receives a fifth message. The fifth message is used to request to position a second device, is used to request to obtain location information of the second device, or is used to request to determine a location of the second device.

Optionally, the second device includes a positioned device, a target terminal device, or a to-be-positioned device.

Optionally, the fifth message includes a provide positioning information request (Namf_Location_ProvidePositioningInfo Request, Nlmf_Location), or the fifth message includes a location determine request (Nlmf_Location_ DetermineLocation Request).

Optionally, the second network element receives one or more first devices from the network storage network element. That the second network element receives one or more first devices from the network storage network element may mean that the second network element receives a feedback message that is of the fourth message and that is sent by the network storage network element. The feedback message of the fourth message includes the one or more first devices.

Optionally, the one or more first devices from the network storage network element may refer to information that is about the one or more first devices and that is from the network storage network element. The information about the first device may refer to related information of the first device, for example, may refer to all or a part of network function configuration information (network function profile, NF Profile) of the first device; for another example, may refer to a part or all of registration information of the first device; for another example, may refer to a part or all of subscription information of the first device; for another example, may refer to a part or all of a context of the first device; or for another example, may refer to a part or all of configuration information of the first device. This is not limited in this application.

In this embodiment of this application, the second device is positioned with assistance of the first device, so that network resources can be saved and positioning performance can be improved. In addition, the network storage network element may query, based on related information carried in the fourth message, a first device that needs to be obtained, and return a query result to the second network element, so that the second network element can accurately and efficiently find the first device needed by positioning, to improve efficiency and accuracy of positioning measurement.

With reference to the sixth aspect, in some implementations of the sixth aspect, the fourth message includes sixth information. The sixth information indicates that the first device is a first device that exists in a reference area of the second device.

In this embodiment of this application, a range of the reference area in which the first device is located is more accurate due to an indication function of the sixth information. In this way, when positioning measurement is performed, the access management network element can effectively find the first device with reference to first information, to improve efficiency and accuracy of positioning.

According to a seventh aspect, a communication apparatus is provided. The apparatus includes a module configured to perform the method according to any one of the first aspect or the possible implementations of the first aspect, a module configured to perform the method according to any one of the second aspect or the possible implementations of the second aspect, a module configured to perform the method according to any one of the third aspect or the possible implementations of the third aspect, a module configured to perform the method according to any one of the fourth aspect or the possible implementations of the fourth aspect, a module configured to perform the method according to any one of the fifth aspect or the possible implementations of the fifth aspect, or a module configured to perform the method according to any one of the sixth aspect or the possible implementations of the sixth aspect.

According to an eighth aspect, a communication apparatus is provided. The apparatus includes a processor. The processor is coupled to a memory, and may be configured to execute instructions in the memory, to implement the method according to any one of the possible implementations of the first aspect. Optionally, the apparatus further includes the memory. Optionally, the apparatus further includes a communication interface, and the processor is coupled to the communication interface.

In an implementation, the apparatus is an AMF. When the apparatus is the AMF, the communication interface may be a transceiver or an input/output interface.

In another implementation, the communication apparatus is a chip disposed in the AMF. When the apparatus is the chip disposed in the AMF, the communication interface may be an input/output interface.

Optionally, the transceiver may be a transceiver circuit. Optionally, the input/output interface may be an input/output circuit.

According to a ninth aspect, a communication apparatus is provided. The apparatus includes a processor. The processor is coupled to a memory, and may be configured to execute instructions in the memory, to implement the method according to any one of the possible implementations of the second aspect or the third aspect. Optionally, the apparatus further includes the memory. Optionally, the apparatus further includes a communication interface, and the processor is coupled to the communication interface.

In an implementation, the apparatus is an NRF. When the apparatus is the NRF, the communication interface may be a transceiver or an input/output interface.

In another implementation, the communication apparatus is a chip disposed in the NRF. When the apparatus is the chip disposed in the NRF, the communication interface may be an input/output interface.

Optionally, the transceiver may be a transceiver circuit. Optionally, the input/output interface may be an input/output circuit.

According to a tenth aspect, a communication apparatus is provided. The apparatus includes a processor. The processor is coupled to a memory, and may be configured to execute instructions in the memory, to implement the method according to any one of the possible implementations of the fourth aspect. Optionally, the apparatus further includes the memory. Optionally, the apparatus further includes a communication interface, and the processor is coupled to the communication interface.

In an implementation, the apparatus is a UE. When the apparatus is the UE, the communication interface may be a transceiver or an input/output interface.

In another implementation, the communication apparatus is a chip disposed in the UE. When the apparatus is the chip disposed in the UE, the communication interface may be an input/output interface.

Optionally, the transceiver may be a transceiver circuit. Optionally, the input/output interface may be an input/output circuit.

According to an eleventh aspect, a communication apparatus is provided. The apparatus includes a processor. The processor is coupled to a memory, and may be configured to execute instructions in the memory, to implement the method according to any one of the possible implementations of the fifth aspect or the sixth aspect. Optionally, the apparatus further includes the memory. Optionally, the apparatus further includes a communication interface, and the processor is coupled to the communication interface.

In an implementation, the apparatus is an LMF. When the apparatus is the LMF, the communication interface may be a transceiver or an input/output interface.

In another implementation, the communication apparatus is a chip disposed in the LMF. When the apparatus is the chip disposed in the LMF, the communication interface may be an input/output interface.

Optionally, the transceiver may be a transceiver circuit. Optionally, the input/output interface may be an input/output circuit.

According to a twelfth aspect, a processor is provided. The processor includes an input circuit, an output circuit, and a processing circuit. The processing circuit is configured to: receive a signal through the input circuit, and transmit a signal through the output circuit, so that the processor performs the method according to any one of the possible implementations of any one of the first aspect to the sixth aspect.

In a specific implementation process, the processor may be a chip, the input circuit may be an input pin, the output circuit may be an output pin, and the processing circuit may be a transistor, a gate circuit, a trigger, various logic circuits, or the like. The input signal received by the input circuit may be received and input by, for example, but not limited to, a receiver, and the signal output by the output circuit may be output to, for example, but not limited to, a transmitter and transmitted by the transmitter. In addition, the input circuit and the output circuit may be a same circuit, and the circuit is used as the input circuit and the output circuit at different moments. Specific implementations of the processor and the various circuits are not limited in this embodiment of this application.

According to a thirteenth aspect, an apparatus is provided. The apparatus includes a processor and a memory. The processor is configured to: read instructions stored in the memory, receive a signal through a receiver, and transmit a signal through a transmitter, to perform the method according to any one of the possible implementations of any one of the first aspect to the sixth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The apparatus in the thirteenth aspect may be a chip. The processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may exist independently of the processor.

According to a fourteenth aspect, a computer-readable storage medium is provided. The computer-readable storage medium stores a computer program or instructions. When the computer program or the instructions are executed, the method according to any one of the possible implementations of any one of the first aspect to the sixth aspect is implemented.

According to a fifteenth aspect, a computer program product including instructions is provided. When the instructions are run, the method according to any one of the possible implementations of any one of the first aspect to the sixth aspect is implemented.

According to a sixteenth aspect, a communication chip is provided. The chip stores instructions. When the instructions are run on a computer device, the communication chip is enabled to perform the method according to any one of the possible implementations of any one of the first aspect to the sixth aspect.

According to a seventeenth aspect, a communication system is provided. The communication system includes one or more of an AMF, an NRF, and an LMF. Optionally, the communication system may further include a UDM. Optionally, the communication system may further include a GMLC.

Optionally, the communication system further includes another device that communicates with the foregoing network element.

### BRIEF DESCRIPTION OF DRAWINGS

FIG. 1 is a diagram of an application scenario applicable to this application according to this application;
FIG. 2 is a schematic of a network architecture according to this application;
FIG. 3 is a schematic of a network architecture that is used to support positioning and that is provided by the 3GPP;
FIG. 4 is an interaction diagram of a communication method 400 according to this application;
FIG. 5 is an interaction diagram of a communication method 500 according to this application;
FIG. 6 is an interaction diagram of a communication method 600 according to this application;
FIG. 7 is an interaction diagram of a communication method 700 according to this application;
FIG. 8A and FIG. 8B are an interaction diagram of a communication method 800 according to this application;
FIG. 9A to FIG. 9C are an interaction diagram of a communication method 1000 according to this application;
FIG. 10 is a block diagram of a communication apparatus according to an embodiment of this application; and
FIG. 11 is a diagram of a structure of a communication apparatus according to an embodiment of this application.

### DESCRIPTION OF EMBODIMENTS

In this application, "at least one (item)" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually represents an "or" relationship between the associated objects. "At least one item (piece) of the following" or a similar expression thereof means any combination of these items, including a singular item (piece) or any combination of plural items (pieces). For example, at least one item (piece) of a, b, or c may represent: a, b, c, "a and b", "a and c", "b and c", or "a, b, and c", where a, b, and c may be singular or plural.

It should be noted that names of messages between network elements, names of parameters in the messages, or the like in the following embodiments of this application are merely examples, and there may be other names in a specific implementation. This is not specifically limited in embodiments of this application.

The following describes technical solutions in embodiments of this application with reference to the accompanying drawings.

The technical solutions in embodiments of this application may be applied to various communication systems such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

To address a challenge of a wireless broadband technology and maintain a leading edge of a 3GPP network, the 3GPP standard group formulated a next-generation mobile communication network architecture (next generation system), which is referred to as a 5G network architecture. This architecture not only supports a wireless technology (for example, LTE) defined by the 3GPP standard group in accessing a 5G core network (5G core network, 5GC), but also supports a non-3GPP access technology in accessing the 5GC through a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), or a next generation packet data gateway (next generation packet data gateway, NG-PDG). Core network functions are classified into a user plane network element function (user plane function, UPF) and a control plane network element function (control plane function, CPF). The UPF is mainly responsible for forwarding a data packet, controlling quality of service (quality of service, QoS), collecting charging information, and the like. The CP is mainly responsible for user registration authentication, mobility management, delivering a data packet forwarding policy and a QoS control policy to the UPF, and the like. The CP may be further classified into an access and mobility management function (access and mobility management function, AMF) and a session management function (session management function, SMF).

A first device or a second device in embodiments of this application may refer to a user equipment (user equipment, UE), a terminal, an access terminal, a terminal in V2X communication, a subscriber unit, a subscriber station, a mobile station, a remote terminal, a mobile device, a user terminal, a terminal, a wireless communication device, a user agent, or a user apparatus. A positioning reference unit may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application. The terminal may further include a V2X device, for example, a vehicle or an on board unit (on board unit, OBU) in the vehicle.

The first device in embodiments of this application is connected to a radio access network (radio access network, RAN) device in a wireless manner. A radio access network element is connected to a core network device in a wireless or wired manner. The core network device and the radio access network element may be different independent physical devices, a function of the core network device and a logical function of the radio access network element may be integrated into one physical device, or some functions of the core network device and some functions of the radio access network element may be integrated into one physical device. The terminal may be located at a fixed location, or may be mobile.

The core network device includes, for example, a mobility management entity (mobility management entity, MME), a broadcast multicast service center (broadcast multicast service center, BMSC), or the like, or may include a corresponding functional entity in a 5G system, for example, a core network control plane (control plane, CP) or a user plane (user plan, UP) network function such as an SMF and an access and mobility management function AMF. The core network control plane may also be understood as a core network control plane function (control plane function, CPF) entity.

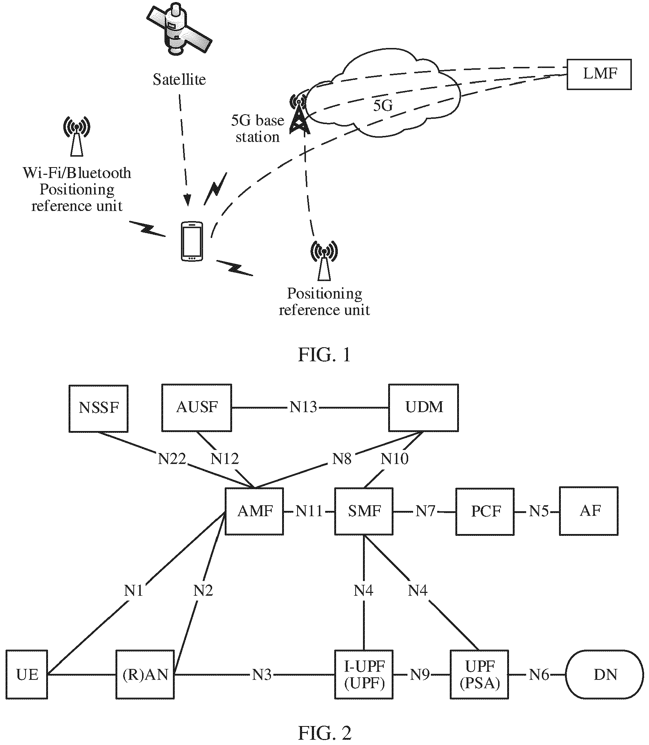

FIG. 1 is a diagram of an application scenario applicable to this application according to this application. As shown in FIG. 1, this embodiment of this application is applied to a location positioning scenario of a to-be-positioned device. When a location management function (location management function, LMF) computes final location information of the to-be-positioned device, the computation is based on both location measurement results of a 5G base station and a satellite for the to-be-positioned device and a location measurement result of an authorized positioning reference unit for the to-be-positioned device. The LMF network element may summarize the results measured by the 5G base station, the satellite, the authorized positioning reference unit, and the like, and obtain a final location measurement result for the to-be-positioned device through comprehensive analysis, to improve accuracy of the final result of the location measurement performed on the to-be-positioned device, so as to better meet a positioning requirement of a vertical industry.

It should be noted that the solutions in embodiments of this application may be further applied to a scenario of converged sensing and positioning. In other words, "positioning" in embodiments of this application may be replaced with "sensing".

It should be noted that, in a current protocol, a subject name corresponding to the positioning reference unit is not specified. In a future protocol or network architecture, any subject name that has a same or similar function as the subject name should be considered equivalent to the subject name. For example, the positioning reference unit may also be referred to as a positioning reference device, or the positioning reference unit may be referred to as any one or more of the foregoing replacement words of the first device.

FIG. 2 is a schematic of a network architecture according to an embodiment of this application. As shown in FIG. 2, the network architecture may include: a user equipment, an access management network element, a session management network element, a user plane network element, a unified data management network element, a policy control network element, an authentication server, a network slice selection function, an application network element, a (radio) access network device, a data network, a network exposure network element, and some network elements that are not shown, for example, a network storage network element.

It should be understood that the network architecture in embodiments of this application may be a 5th generation system (5th generation system, 5GS), and a network element in the 5GS may also be referred to as a 5G core network element.

The following separately describes the network elements in the network architecture. 1. User equipment (user equipment, UE): The user equipment may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands or smart jewelry for monitoring physical signs.

2. The access management network element is mainly used for mobility management, access management, and the like. In a 5G communication system, the access management network element may be an access and mobility management function (access and mobility management function, AMF), and mainly performs functions such as mobility management and access authentication/authorization. In addition, the access management network element is further responsible for transferring a user policy between the terminal and the policy control function (policy control function, PCF) network element. The access management network element may receive non-access stratum (non-access stratum, NAS) signaling (including mobility management (mobility management, MM) signaling and session management (session management, SM) signaling) of the terminal device and related signaling (for example, N2 (next generation network (next generation, NG) 2 interface) signaling at a granularity of a base station interacting with the AMF) of the access network device, and completes a user registration procedure, SM signaling forwarding, and mobility management.

3. The session management network element is mainly configured to: manage a session, allocate and manage an internet protocol (internet protocol, IP) address of the user equipment, select an endpoint that can manage a user plane function interface and a policy control and charging function interface, perform downlink data notification, and the like. For example, the session management network element may be an SMF network element, is responsible for a session management function, and completes procedures such as establishment, release, and update related to a PDU session.

4. The policy control network element includes a user subscription data management function, a policy control function, a charging policy control function, quality of service (quality of service, QoS) control, and the like, is a unified policy framework used to guide network behavior, and provides policy rule information and the like for a control plane function network element (for example, the AMF or SMF network element).

In the 5G communication system, the policy control network element may be a policy control function (policy control function, PCF) network element. The policy control network element may be responsible for user policy management, including both a mobility-related policy and a PDU session-related policy, such as a QoS policy and a charging policy.

5. The network slice selection function network element is responsible for selecting a network slice for the UE. In the 5G communication system, the application network element may be a network slice selection function (network slice selection function, NSSF) network element. That is, the NSSF may be understood as a name of the network slice selection function network element in the 5G architecture. The network slice selection function network element mainly includes the following functions: selecting a group of network slice instances for the UE, determining allowed network slice selection assistance information (network slice selection assistance information, NSSAI), determining an AMF set that can serve the UE, and the like.

6. The authentication server performs security authentication for the user. In the 5G communication system, the authentication server may be an authentication server function (authentication server function, AUSF) network element, and mainly includes the following functions: an authentication server function, interacting with the UDM to obtain user information, and performing an authentication-related function, for example, generating an intermediate key.

7. The unified data management network element is responsible for management of a user identifier, subscription data, and authentication data, and registration management of a service network element of the user. In the 5G communication system, the unified data management network element may be a unified data management (unified data management, UDM), and mainly includes the following functions: unified data management, and supporting authentication credential processing, user identity processing, access authorization, registration and mobility management, subscription management, and short message management, and the like in a 3GPP authentication and key agreement mechanism.

8. Network exposure network element: In the 5G communication system, the network exposure network element may be a network exposure function (network element function, NEF) network element, and is mainly configured to expose a service and a capability of a 3GPP network function to the AF, and also enable the AF to provide information for the 3GPP network function. Specifically, the NEF may be understood as a name of a capability exposure network element in the 5G architecture. The capability exposure network element mainly includes the following functions: securely exposing a service and a capability that are provided by a 3GPP network function, for example, internally exposing or exposing to a third party; and converting or translating information exchanged with the AF and information exchanged with an internal network function, for example, an AF service identifier and internal 5G core network information such as a data network name (data network name, DNN) and single network slice selection assistance information (single network slice selection assistance information, S-NSSAI).

9. The network storage network element provides a storage function and a selection function of network functional entity information for another core network element. In the 5G communication system, the network element may be a network function repository function (network function repository function, NRF) network element, and mainly includes the following functions: a service discovery function, and maintaining a network function (network function, NF) text of available NF instances and a service supported by the NF instances.

10. Application network element: In the 5G communication system, the application network element may be an application function (application function, AF) network element, representing an application function of a third party or an operator, is an interface for obtaining external application data by the 5G network, and is mainly configured to transfer a requirement of an application side for a network side. The AF network element mainly includes the following functions: interacting with a 3GPP core network to provide business or a service, including interacting with the NEF, interacting with a policy architecture, and the like.

11. The user plane network element serves as an interface to the data network, and implements functions such as user-plane data forwarding, charging statistics at a session/flow level, and bandwidth limiting, that is, packet routing and forwarding, quality of service (quality of service, QoS) processing of user plane data, and the like. In the 5G communication system, the network element may be a UPF network element.

12. (Radio) access network device (radio access network, (R)AN): The access network device may also be referred to as an access device. The (R)AN can manage a radio resource, provide an access service for the user equipment, and forwards user equipment data between the user equipment and the core network. The (R)AN may also be understood as a base station in the network.

For example, the access network device in embodiments of this application may be any communication device having a wireless transceiver function for communicating with the user equipment. The access network device includes but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (home evolved NodeB, HeNB or home NodeB, HNB), a baseband unit (baseband unit, BBU), an access point (access point, AP) in a wireless fidelity (wireless fidelity, Wi-Fi) system, a wireless relay node, a transmission point (transmission point, TP), a transmission reception point (transmission reception point, TRP), and the like; may be a gNB or a transmission point (TRP or TP) in 5G such as an NR system, or one or one group (including a plurality of antenna panels) of antenna panels of a base station in the 5G system; or may be a network node included in the gNB or the transmission point, for example, a baseband unit (BBU) or a distributed unit (distributed unit, DU).

In some deployments, the gNB may include a central unit (central unit, CU) and a DU. The gNB may further include an active antenna unit (active antenna unit, AAU). The CU performs a part of functions of the gNB, and the DU performs a part of the functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling such as RRC layer signaling may also be considered to be sent by the DU, or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

13. The data network provides a carrier service, an internet access service, or a third-party service, and includes a server. The server implements encoding, rendering, and the like on a video source. In the 5G communication system, the data network may be a data network (data network, DN).

The foregoing function network element may be a network element in a hardware device, may be a software function running on dedicated hardware, or may be a virtualized function instantiated on a platform (for example, a cloud platform). One or more services may be obtained through division based on the foregoing function network elements. Further, a service independent of a network function may exist. In this application, an instance of the function network element, an instance of the service included in the function network element, or an instance of the service that exist independently of the network function may be referred to as a service instance.

It should be understood that unified descriptions are provided herein. If the foregoing network elements appear in the following architecture, the foregoing descriptions of the functions included in the network elements are also applicable. For brevity, details are not described again when the network elements appear next time.

A person skilled in the art may learn from FIG. 2 that the terminal device may access the 5GS via the access network device, and the terminal device may communicate with the AMF network element through a next generation network (next generation, NG) 1 interface (N1 for short). The access network device communicates with the AMF network element through an NG2 interface (N2 for short), and the access network device communicates with the UPF network element through an NG3 interface (N3 for short). The AMF network element communicates with the SMF network element through an NG11 interface (N11 for short), the AMF network element communicates with the UDM network element through an NG8 interface (N8 for short), the AMF network element communicates with the AUSF network element through an NG12 interface (N12 for short), and the AMF network element communicates with the PCF network element through an NG15 interface (N15 for short). The SMF network element communicates with the PCF network element through an NG7 interface (N7 for short), and the SMF network element communicates with the UPF network element through an NG4 interface (N4 for short). The NEF network element communicates with the SMF network element through an NG29 interface (N29 for short). The UPF network element accesses the data network (data network, DN) through an NG6 interface (N6 for short).

Certainly, the system architecture in FIG. 2 may further include another network element, for example, a device or a network element such as a network slice selection function (network slice selection function, NSSF), a unified data repository (unified data repository, UDR), or a network repository function (network repository function, NRF). This is not specifically limited.

It should be understood that a name of each network element shown in FIG. 2 is merely a name, and the name constitutes no limitation on a function of the network element. In the 5G network and another future network, the foregoing network elements may alternatively have other names. This is not specifically limited in embodiments of this application. For example, in a 6G network, a part or all of the foregoing network elements may still use terms in 5G, or may have other names. Unified descriptions are provided herein. Details are not described again below.

It should be further understood that embodiments of this application are not limited to the system architecture shown in FIG. 2. For example, a communication system to which this application is applicable may include more or fewer network elements or devices. The devices or the network elements in FIG. 2 may be hardware, or may be software obtained through function division or a combination of the hardware and the software. The devices or the network elements in FIG. 2 may communicate with each other via another device or network element.

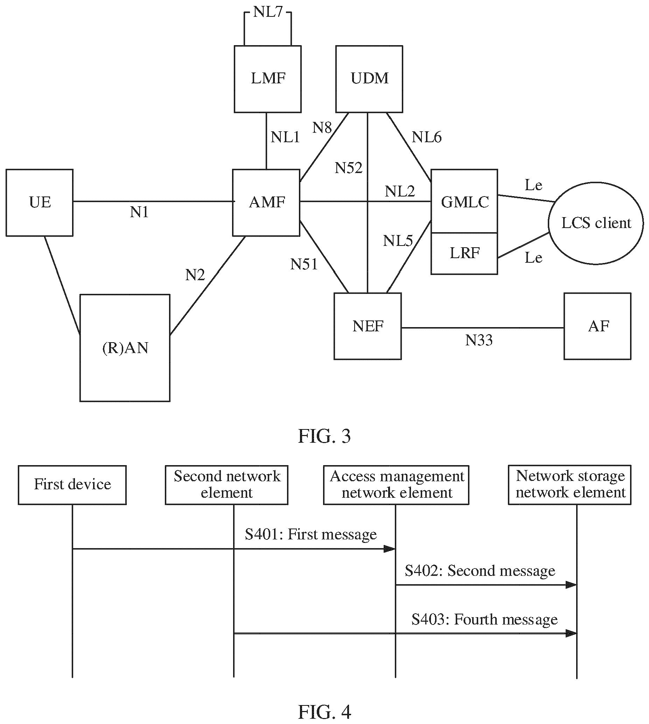

FIG. 3 is a schematic of a network architecture that is used to support positioning and that is provided by the 3GPP. As shown in FIG. 3, the network architecture specifically includes a UDM, a UE, an AMF, a RAN, a NEF, an AF, a gateway mobile location center (gateway mobile location center, GMLC), a location retrieval function (location retrieval function, LRF), a location service client (LCS client), and an LMF. The schematic architecture diagram is an extension based on the architecture shown in FIG. 2. On the basis of the schematic architecture diagram shown in FIG. 2, the GMLC, the LRF, the LCS client, and the LMF are added to support a positioning service function.

In FIG. 3, the UE is connected to the AMF through an N1 interface, and the UE is connected to the RAN by using a radio resource control (radio resource control, RRC) protocol. The RAN is connected to the AMF through an N2 interface. The AMF is connected to the UDM through an N8 interface to obtain subscription data from the UDM. The AMF is connected to the LMF through an NL1 interface, the AMF is connected to the NEF through an N51 interface, and the AMF is connected to the GMLC through an NL2 interface. The NEF is connected to the GMLC through an NL5 interface. The UDM is connected to the GMLC through an NL6 interface, and the UDM is connected to the NEF through an N52 interface. The NEF is connected to the AF through an N33 interface. The GMLC and LRF are connected to the LCS client through Le interfaces.

It should be understood that an interface or a service-based interface between the network elements shown in FIG. 3 is merely an example. In a 5G network and another future network, the interface or the service-based interface between the network elements may alternatively be not the interface shown in the figure. This is not limited in this application.

For example, FIG. 4 is an interaction diagram of a communication method 400 according to this application. As shown in FIG. 4, the method 400 includes the following steps.

Step S401: A first device sends a first message to an access management network element. The first message includes second information. The second information indicates a capability of the first device. The capability of the first device is described in the summary, and details are not described herein again.

Optionally, the first device is configured to perform one or more operations in positioning measurement (positioning measurement), positioning computation (positioning calculation), location measurement (location measurement), location estimation (location calculation), location computation, and positioning estimation (positioning estimate).

Optionally, the positioning computation or the positioning measurement may be one or more of positioning-assisted measurement, positioning-assisted computation, positioning measurement performed on a terminal device, positioning computation performed on the terminal device, assisted positioning measurement performed on the terminal device, and assisted positioning computation performed on the terminal device. The positioning-assisted measurement may be assisting any one of a base station, an LMF network element, and a second device in location measurement on the second device.

A function of the first device is described in the summary, and details are not described herein again.

Optionally, the first message may further include one or more of a registration request, a service request, and uplink non-access stratum transport, and may further include one or more of other messages that are used as examples for the first message in the summary.

Step S402: The access management network element sends a second message to a network storage network element. The second message includes first information. The first information indicates that the first device exists in the access management network element, the first information is used to register related information of the first device with the network storage network element, or the first information indicates that a type of a network function is the first device.

Optionally, the existence of the first device in this step may be existence of information about the first device, for example, may be existence of related information of the first device, may be existence of a part or all of registration information of the first device, may be existence of a part or all of subscription information of the first device, or may be existence of a part or all of network configuration information (network function profile, NF profile) of the first device. The existence of related information of the first device may be existence of context information (context) of the first device or the like.

Optionally, the second message further includes information about a reference area of the first device.

Optionally, the information about the reference area of the first device may be used to express a reference location of the first device. The information about the reference area may be information about an area that is of the first device and that is covered by an access network device that currently serves the first device, and may include an identifier of a cell in which the terminal is currently located. The information about the reference area may alternatively be information about a location that is of the first device and that is covered by a target access network device of the first device, and may include at least one of an identifier (for example, a CGI) of a cell, an identifier (for example, a gNB ID or an NG-RAN ID) of an access network device, an identifier (for example, a TAI or a TAC) of a tracking area, and an identifier of a public land mobile network (for example, a public land mobile network, PLMN), and may further include a global positioning system (global positioning system, GPS) geographic location information, a sector identifier, a PCI, an antenna identifier, a DU identifier, and the like.

Further, optionally, the first information specifically indicates that the access management network element includes the first device in the reference area of the first device.

Optionally, the second message further includes a network function update request, and an English signaling name corresponding to the network function update request may be Nnrf_NFManagement_NFUpdate Request. The second message may further include a network function registration request, and an English signaling name corresponding to the network function registration request may be Nnrf_NFManagement_NFRegister Request.

Optionally, the second message further includes fourth information, and the fourth information indicates, represents, or expresses that the type of the network function is the first device.

Step S403: The network storage network element receives a fourth message sent by a second network element. The fourth message is used to obtain or discover the access management network element, or the fourth message is used to discover or obtain the first device.

It should be understood that the discovering or obtaining the access management network element described in this embodiment of this application may be discovering or obtaining information about the access management network element, for example, may be related information of the access management network element. In an example, the related information of the access management network element may be a part or all of configuration information of the access management network element. Similarly, the discovering or obtaining the first device described in this embodiment of this application may also be discovering or obtaining information about the first device, for example, may be related information of the first device. In an example, the related information of the first device may be registration information of the first device or subscription information of the first device.

Optionally, the fourth message further includes information about a reference area of the second device. The second device includes a to-be-positioned terminal device or a positioned device.

Optionally, the second network element may be an access management network element (for example, an access and mobility management function network element AMF) or may be a location management function network element LMF.

Optionally, the fourth message includes fifth information, and the fifth information indicates that an access management network element that needs to be discovered or obtained is an access management network element in which the first device exists.

Optionally, the fourth message includes the fourth information, and the fourth information indicates that a type of a network function that needs to be discovered or obtained is the first device. In addition, the fourth message may further include sixth information, and the sixth information indicates that the first device is a first device that exists in the reference area of the second device.

Optionally, the fourth message includes a network function discovery request (Nnrf_NFDiscovery_Request).

Optionally, the fourth message further includes a network function list retrieval (Nnrf_NFManagement_NFListRetrieval Request) or a network function profile retrieval (Nnrf_NFManagement_NFProfileRetrieval Request).

Optionally, the fourth message may alternatively be another message having a same function, for example, another message having a different message name but a same or similar function. This is not limited in this application.

Optionally, the fifth information specifically indicates that the access management network element is an access management network element that includes the first device in the reference area of the second device. To be specific, the fifth information specifically indicates that the first device exists in an access management network element that needs to be discovered or obtained, and the first device is located in the reference area of the second device.

It should be understood that step S401 in this embodiment of this application is optional, and the access management network element may alternatively obtain information carried in the first message in another manner, for example, may obtain the information through configuration.

It should be understood that an explanation of the reference area of the second device is the same as the explanation of the reference area of the device in the summary and the explanation of the reference area of the first device in step S402. For brevity, details are not described herein again.

It should be understood that "obtaining" in this embodiment of this application includes any term that has an obtaining function, for example, query, discovery, and retrieval. This is not limited in this application.

It should be understood that the access management network element in this embodiment of this application may be an access and mobility management function network element, and the network storage network element may be a network repository function network element NRF. In a future 5G or 6G network, other names may alternatively be used. This is not limited in this application.

It should be understood that verbs such as "indicate" and "exist" in this embodiment of this application constitute no limitation on this application, and may be replaced with any term that is the same as or similar to expressions thereof. For example, "indicate" may also be replaced with "notify", and "exist" may be replaced with "include, contain, registered, or register". This is not limited in this application.

In this embodiment of this application, the access management network element may send, to the network storage network element, the first device that can be used for positioning measurement or the information about the first device. When the second device has a positioning requirement, the access management network element can obtain, by interacting with the network storage network element, the first device that can be used for positioning or the information about the first device. In this way, when positioning is performed on the second device, the positioning is based on both location measurement results of a 5G base station, a satellite, and the like for the second device and a positioning measurement result of the first device that can be used for positioning, so that accuracy of a final location measurement result for the second device can be improved.

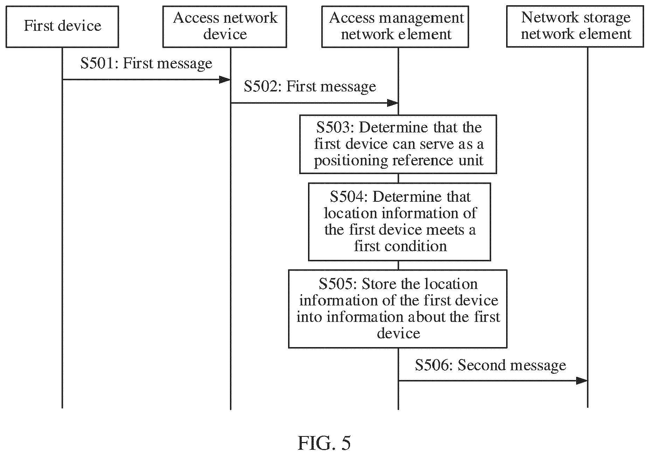

The following describes in detail the communication method in the embodiment shown in FIG. 4 with reference to FIG. 5 to FIG. 9A to FIG. 9C.

Based on a framework of the embodiment shown in FIG. 4, for example, FIG. 5 is an interaction diagram of a communication method 500 according to this application. As shown in FIG. 5, the method 500 includes the following steps.

Step S501: A first device sends a first message to an access network device. The first message may include one or more of a registration request, a service request, and uplink non-access stratum transport. The first message further includes second information, and the second information indicates a capability of the first device. Capability information of the first device indicates or decides whether the first device can serve as a positioning reference unit. In addition, the first message further includes location information of the first device.

Optionally, the first message may further include any one or more messages listed in the summary. This is not limited in this application.

Optionally, the location information of the first device is explained as described in the summary, and details are not described herein again.

Optionally, the capability of the first device is explained as described in the summary, and details are not described herein again.

Optionally, the first device includes a positioning reference unit. The positioning reference unit may be a first device that is authenticated or authorized and that can be used to perform positioning measurement. The positioning reference unit may also be referred to as a positioning reference device. In addition, as described in the replacement words of the positioning reference device in the summary, the positioning reference unit may be replaced with a name of any device that may appear in the future and that has a same or similar function as the positioning reference unit. This is not limited in this application.

It should be noted that, in a current protocol, a subject name corresponding to the positioning reference unit is not specified, and in a future protocol or network architecture, any subject name that has a same or similar function as the subject name should be considered equivalent to the subject name.

Optionally, the first message may further include identification information of the first device and/or information (for example, UE location information (UE location information, ULI)) about a reference area of a second device.

Step S502: After receiving the first message sent by the first device, the access network device forwards the first message to an access management network element.

Step S503: After receiving the first message sent by the access network device, the access management network element determines or decides, based on the second information carried in the first message, that the first device can serve as a positioning reference unit.

Optionally, the access management network element determines, based on subscription information of the first device, that the first device can serve as the positioning reference unit.

Optionally, the subscription information of the first device may be subscription information of the first device that is stored by the access management network element, or may be subscription information of the first device that is obtained by the access management network element from a UDM.

Optionally, if the access management network element determines that the first device can serve as the positioning reference unit, the access management network element stores the second information into information about the first device.

It should be understood that, the access management network element may alternatively decide, based on other related information than the subscription information of the first device, whether the first device can serve as the positioning reference unit. This is not limited in this application.

Step S504: The access management network element determines that the location information of the first device that is carried in the first message meets a first condition.

It should be noted that the first condition is explained as described in the summary, and details are not described herein again.

Step S505: The access management network element stores the location information of the first device into the information about the first device.

Optionally, the information about the first device may include related information of the first device, for example, include a part or all of registration information of the first device; for example, include a part or all of subscription information of the first device; or for example, including a part or all of context information of the first device.

Optionally, the access management network element may alternatively perform, in this step, the operation of storing the second information into the information about the first device. To be specific, the access management network element may not perform this operation in step S503, but store the second information and the location information of the first device into the information about the first device after further determining that the location information of the first device meets the first condition.

It should be understood that, before step S505, a purpose of determining or deciding, by the access management network element, whether the location information of the first device meets the first condition is to detect whether the first device has been moved by external force, or even if the first device has been moved by the external force, whether a location after the movement is still within an allowed error range. More specifically, for example, if the first device is moved by the external force, a location of the second device that is obtained by the first device by performing the positioning measurement may be inaccurate. For example, it is assumed that coordinates of the first device are (X1, Y1), and coordinates of the second device that are measured by the first device are (X2, Y2). An LMF notifies that coordinates of the second device that are measured by a base station are (X3, Y3), and coordinates of the base station are (X4, Y4). If there is a relationship (X1+Y=X4, Y1+Y=Y4) between the coordinates of the base station and the coordinates of the first device, the LMF may obtain a final location measurement result for the second device through calibration and summarization based on the coordinates. Therefore, if the first device has been moved by the external force, final location information of the second device that is obtained by the LMF through computation may be affected.

Step S506: The access management network element sends a second message to a network storage network element.

Optionally, the second message may be a network function management update request, and is used to update related information of the access management network element. When the first message is a network function management update request, the first message may include first information, and the first information indicates that the first device exists in the access management network element. The first message may further include information about a reference area of the first device and/or an indication indicating that the first device exists in the reference area of the first device.

Optionally, the information about the reference area of the first device is described in the summary, and details are not described herein again.

Optionally, the first message may alternatively be a network function management registration request, and is used to create or register the related information of the first device. The first message carries the identification information of the first device and/or the information about the reference area of the first device.

Optionally, the first message may alternatively be a network function management update request, and is used to update the related information of the first device. The message carries the identification information of the first device and/or the information about the reference area of the first device.

Optionally, the identification information of the first device may be an NF (network function) instance ID corresponding to the first device. The information about the reference area of the first device is explained in the summary, and details are not described herein again.

It should be understood that steps S501 and S502 are optional, and the access management network element may alternatively obtain information carried in the first message in another manner.

It should be understood that this embodiment of this application is only a preferred embodiment provided in this application. Omission, division, or sequence adjustment of steps that are made based on this embodiment and that do not affect implementation of the technical solution all fall within the scope of this application. For example, when step S503 and/or step S504 are/is omitted, overall implementation of the technical solution is not affected, and a presented technical solution also falls within the scope disclosed in this application.

In this embodiment of this application, before the first device is used to perform positioning, the access management network element may first determine whether the first device can serve as a positioning reference unit. When the access management network element determines that the first device can serve as the positioning reference unit, the first device is used to perform positioning measurement. In addition, based on this, the access management network element may further decide whether the location information of the first device meets the first condition. When determining that the location information of the first device meets the first condition, the access management network element stores the location information of the first device into the information about the first device. In this way, before the first device is used to perform the positioning measurement, a positioning function of the first device is authenticated, and accuracy of the location information of the first device is verified, so that accuracy of the positioning measurement can be improved.

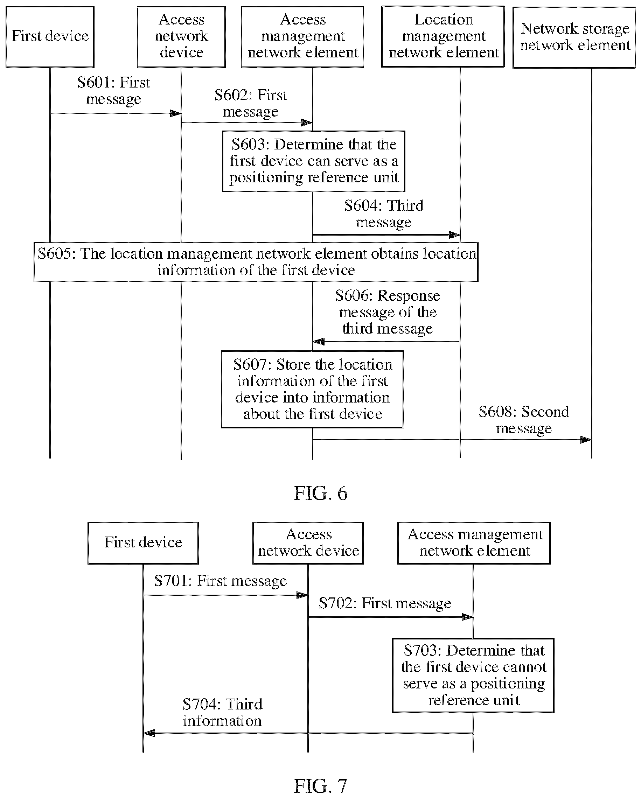

Parallel to the embodiment shown in FIG. 5, for example, FIG. 6 is an interaction diagram of a communication method 600 according to this application. As shown in FIG. 6, the method 600 includes the following steps.

Step S601: A first device sends a first message to an access network device. The first message includes one or more of a registration request, a service request, and uplink non-access stratum transport. The first message further includes second information, and the second information indicates a capability of the first device. The capability of the first device is described in the corresponding explanation in the summary, and details are not described herein again.

Optionally, as described in the first aspect of the summary, the first message may further include any one or more of the following messages:
registration complete, deregistration accept, deregistration request, service reject, service accept, control plane service request, uplink non-access stratum transport, mobile originated location request, authentication response, authentication failure, configuration update complete, identity response, notification response, security mode complete, security mode reject, security protected 5G non-access stratum message, 5G mobility management status, network slice-specific authentication complete, LPP protocol data unit, NR protocol data unit, LPP message, request capabilities provide capabilities, request assistance data, provide assistance data, request location information, provide location information, LPP request or provide location information message, LPP capability transfer, LPP request or provide assistance data message, LPP request or provide capability message, LPP procedure, LPP capability transfer, NR message, NR request or provide location information message, NR capability transfer, NR request or provide assistance data message, NR request or provide capability message, NR procedure (NR procedure), NR capability transfer, PDU session establishment request, PDU session modification request, PDU session release request, remote UE report, NG setup request, transmission reception point information response, capability exchange, and the like. Optionally, the first message may further include another message other than the foregoing messages. This is not limited in this application.

It should be understood that a difference between step S601 and step S501 is that the first message in step S601 does not include location information of the first device.

Optionally, the first device includes a positioning reference unit. The positioning reference unit may be a first device that is authenticated or authorized and that can be used to perform positioning measurement. The positioning reference unit may also be referred to as a positioning reference device. In addition, the positioning reference unit may be replaced with any one or more of the replacement words of the positioning reference unit in the first aspect of the summary, or may be replaced with a name of any device that may appear in the future and that has a same or similar function as the positioning reference unit. This is not limited in this application.

It should be noted that, in a current protocol, a subject name corresponding to the positioning reference unit is not specified, and in a future protocol or network architecture, any subject name that has a same or similar function as the subject name should be considered equivalent to the subject name.

Optionally, the first message may further include identification information of the first device (where for example, the identification information of the first device may include a generic public subscription identifier (generic public subscription identifier, GPSI), a subscription permanent identifier (subscription permanent identifier, SUPI), an international mobile subscriber identity (international mobile subscriber identity, IMSI), a subscription permanent equipment identifier (permanent equipment identifier, PEI), a subscription concealed identifier (subscription concealed identifier, SUCI), or the like).

Step S602: After receiving the first message sent by the first device, the access network device forwards the first message to an access management network element.

Step S603: After receiving the first message sent by the access network device, the access management network element determines or decides, based on the second information carried in the first message, that the first device can serve as a positioning reference unit.

Optionally, the access management network element may determine, based on subscription information of the first device, that the first device can serve as the positioning reference unit.

Optionally, the subscription information of the first device may be subscription information of the first device that is stored by the access management network element, or may be subscription information of the first device that is obtained by the access management network element from a UDM.

Optionally, if the access management network element determines that the first device can serve as the positioning reference unit, the access management network element stores the second information into information about the first device.

Optionally, the information about the first device may be related information of the first device, for example, may be a part or all of registration information of the first device, may be a part or all of the subscription information of the first device, may be a part or all of a context of the first device, may be a part or all of other related information of the first device, or the like.

It should be understood that, the access management network element may alternatively decide, based on other related information than the subscription information of the first device, whether the first device can serve as the positioning reference unit. This is not limited in this application.

It should be noted that, in the current protocol, a subject name corresponding to the positioning reference unit is not specified. In the future protocol or network architecture, any subject name that has a same or similar function as the subject name should be considered equivalent to the subject name. For example, the positioning reference unit may also be referred to as a positioning reference device. Alternatively, the positioning reference unit may be replaced with any one or more of the replacement words of the positioning reference unit in the first aspect of the summary, or may be replaced with a name of any device that may appear in the future and that has a same or similar function as the positioning reference unit. This is not limited in this application.

Step S604: The access management network element sends a third message to a second network element. The third message is used to request to obtain the location information of the first device.

Optionally, the second network element may be a location management network element.

Optionally, the third message includes a location determine request message (Nlmf_Location_DetermineLocation Request), and the location determine request message is used to request to obtain the location information of the first device.

The location management network element may be an LMF network element, and the location management network element may be replaced with any network element name that appears in a future 5G, 6G, or another network architecture and that has a same or similar function as the location management network element. This is not limited in this application.

Step S605: The second network element obtains the location information of the first device by using a positioning method.

Optionally, as described in the first aspect of this specification, the location information of the first device may be geographic coordinate information preconfigured by an operator, or may be location information measured, computed, or estimated by using the positioning method, for example, may be location information measured, computed, or estimated by using one or more of the following positioning methods:
a global navigation satellite system, dynamic real-time kinematic, a radar, an observed time difference of arrival, an uplink time difference of arrival, a downlink time difference of arrival, an uplink angle of arrival, a downlink angle of departure, a WLAN-based positioning method, a Bluetooth-based positioning method, a multi-round trip time, a time difference of arrival, an enhanced cell identification, terrestrial beacon system positioning, sensor-based positioning, and the like.

Step S606: The first device receives a response message of the third message that is sent by the location management network element. The response message of the third message includes the obtained location information of the first device.

Step S607: The access management network element stores the location information of the first device into the information about the first device.

Optionally, the information about the first device includes the related information of the first device. For example, the related information of the first device may be a part or all of the registration information of the first device, may be a part or all of the subscription information of the first device, may be a part or all of context information of the first device, may be a part or all of the other related information of the first device, or the like.

Optionally, the access management network element may alternatively perform, in this step, the operation of storing the second information into the information about the first device. To be specific, the access management network element may not perform this operation in step S603, but store the second information and the location information of the first device into the information about the first device after obtaining the location information of the first device.

Optionally, step S604 to step S607 may not be performed, and step S608 is directly performed after step S603.

Step S608: The access management network element sends a second message to a network storage network element.

The second message is the same as the second message in the embodiment shown in FIG. 5. For brevity, details are not described herein again.

It should be understood that steps S601 and S602 are optional, and the access management network element may alternatively obtain information carried in the first message in another manner, for example, obtain the information through configuration.

It should be understood that this embodiment of this application is only a preferred embodiment provided in this application. Omission, division, or sequence adjustment of steps that are made based on this embodiment and that do not affect implementation of the technical solution all fall within the scope of this application. For example, when one or more of step S601 to step S606 are omitted, overall implementation of the technical solution is not affected, and a presented technical solution also falls within the scope disclosed in this application.

In this embodiment of this application, the first device needs to send the capability of the first device to a network. In this way, the network may select a proper access management network element or first device based on the first device or an access management network element in which the first device exists. In addition, based on this, the access management network element obtains latest location information of a second device, and applies the information to positioning measurement or computation. In this way, network resources can be saved, and positioning accuracy of a positioned device can be improved.

Corresponding to the embodiment shown in FIG. 5 or FIG. 6, for example, FIG. 7 is an interaction diagram of a communication method 700 according to this application. As shown in FIG. 7, the method 700 includes the following steps.

Step S701: A first device sends a first message to a 5G access network device. The first message includes one or more of a registration request, a service request, and uplink non-access stratum transport. The first message further includes second information, and the second information indicates a capability of the first device. An explanation related to the capability of the first device is described in the first aspect of the summary, and details are not described herein again.

Optionally, the first message may further include one or more of the messages that may be included in the first message in the embodiment shown in FIG. 6 or in the first aspect of the summary.

Optionally, the first message may further include location information of the first device.

Optionally, the first device includes a positioning reference unit. The positioning reference unit may be a first device that is authenticated or authorized and that can be used to perform positioning measurement. The positioning reference unit may also be referred to as a positioning reference device. In addition, the positioning reference unit may be replaced with any one or more of the replacement words of the positioning reference unit in the first aspect of the summary, or may be replaced with a name of any device that may appear in the future and that has a same or similar function as the positioning reference unit. This is not limited in this application.

Optionally, the first message may further include identification information of the first device. An explanation of the identification information of the first device is the same as that in the embodiment shown in FIG. 6.

Step S702: After receiving the first message sent by the first device, the access network device forwards the first message to an access management network element.

Step S703: After receiving the first message sent by the access network device, the access management network element determines or decides, based on the second information carried in the first message, that the first device cannot serve as a positioning reference unit.

Optionally, the access management network element may determine, based on subscription information of the first device, that the first device cannot serve as the positioning reference unit.

Optionally, the subscription information of the first device may be subscription information of the first device that is stored by the access management network element, or may be subscription information of the first device that is obtained by the access management network element from a UDM.

It should be understood that, the access management network element may alternatively decide, based on other related information than the subscription information of the first device, whether the first device can serve as the positioning reference unit. This is not limited in this application.

Step S704: The access management network element sends third information to the first device.

Optionally, the third information is used to notify a cause. For example, the cause may be that the first device cannot serve as a positioning reference unit.

Optionally, the third information may be registration failure information, and is used to notify the first device that initial registration fails. The registration failure information may include a cause value of the registration failure.

It should be understood that, same as the embodiment shown in FIG. 5 or FIG. 6, steps S701 and S702 in this embodiment are optional, and the access management network element may alternatively obtain information carried in the first message in another manner, for example, obtain the information through configuration. It should be noted that, in a current protocol, a subject name corresponding to the positioning reference unit is not specified. In the future protocol or network architecture, any subject name that has a same or similar function as the subject name should be considered equivalent to the subject name. For example, the positioning reference unit may also be referred to as a positioning reference device. Alternatively, the positioning reference unit may be replaced with any one or more of the replacement words of the positioning reference unit in the first aspect of the summary, or may be replaced with a name of any device that may appear in the future and that has a same or similar function as the positioning reference unit. This is not limited in this application.

In this embodiment of this application, before the first device is used to perform positioning measurement, the access management network element may first determine whether the first device can serve as the positioning reference unit. When determining that the first device cannot serve as the positioning reference unit, the access management network element does not select the first device for positioning measurement. In this way, it is equivalent to performing authentication on the first device before the first device is used for positioning. In this way, an unauthorized first device can be prevented from performing positioning measurement on a second device, to avoid impact on a final positioning result for the second device due to inaccurate positioning measurement of the first device.

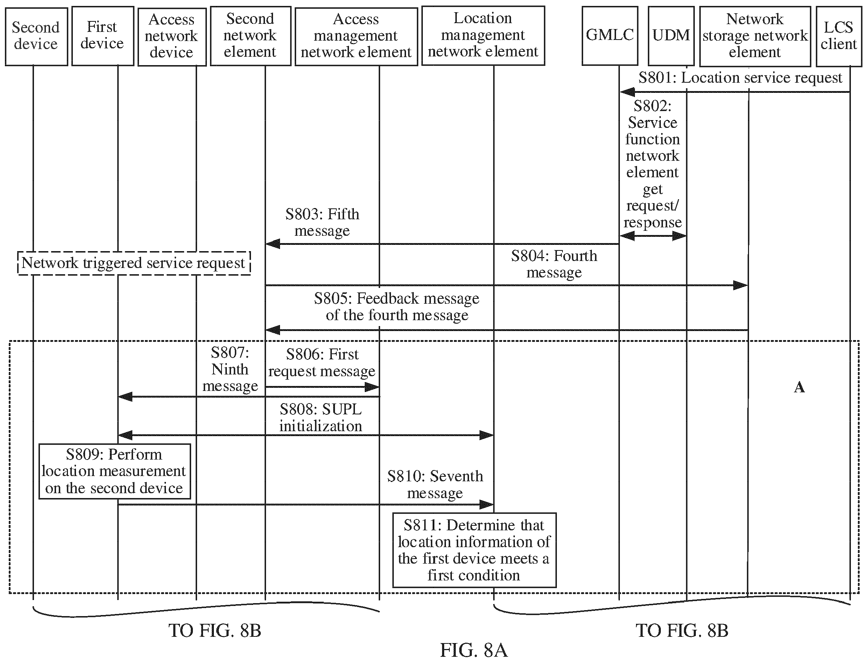

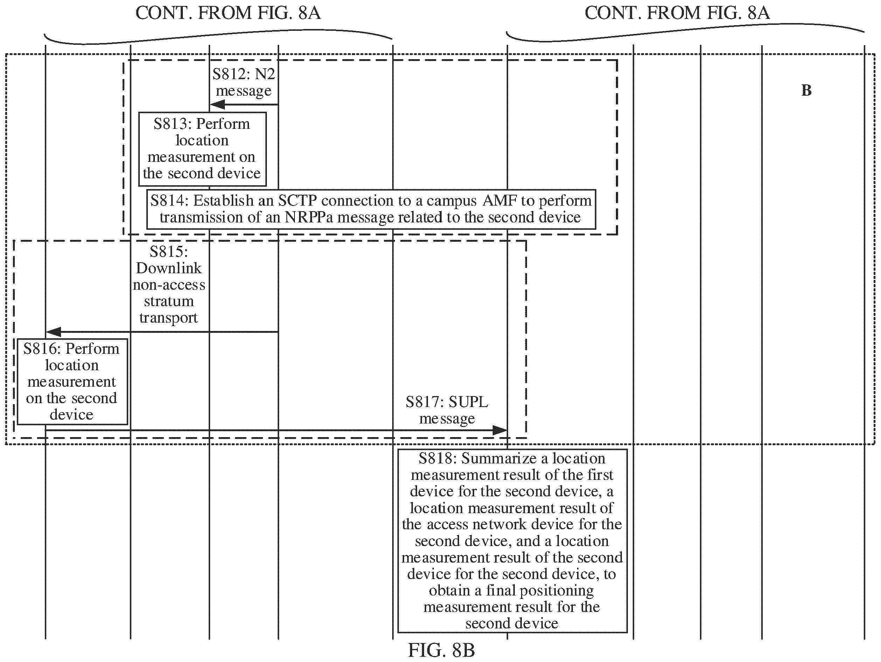

Based on the embodiments shown in FIG. 5 and FIG. 6, for example, FIG. 8A and FIG. 8B are an interaction diagram of a communication method 800 according to this application. As shown in FIG. 8A and FIG. 8B, the method 800 includes the following steps.

Step S801: A location service client (location service client, LCS client) sends a location service request message (LCS service request) to a GMLC. The location service request message includes identification information of a second device and/or required QoS information.

Optionally, the second device is a to-be-positioned device, a positioned device, or a target device, and may include a terminal device or a first device.

Optionally, the identification information of the second device includes one or more of a generic public subscription identifier (generic public subscription identifier, GPSI), a subscription permanent identifier (subscription permanent identifier, SUPI), an international mobile subscriber identity (international mobile subscriber identity, IMSI), a subscription permanent equipment identifier (permanent equipment identifier, PEI), and a subscription concealed identifier (subscription concealed identifier, SUCI).

Optionally, the required QoS information includes one or more of accuracy (for example, a centimeter, a decimeter, or a meter) of a location measurement result for the second device, feedback duration (for example, immediate feedback or feedback after a period of time) of the location measurement result for the second device, and a supported geographical area description (geographical area description, GAD) (for example, GPS location coordinates in longitude and latitude).

Step S802: The GMLC sends a service function network element get request (Nudm_UECM_Get request) to a UDM to obtain identification information of a function network element required to serve the second device.

Optionally, the service function network element get request message includes the identification information of the second device and/or a type of the required function network element.

It should be understood that, in this embodiment of this application, a type of the function network element obtained by the GMLC is a type of the function network element required to carry the identification information of the second device. The type of the required function network element in this embodiment is an access management network element (for example, an access and mobility management function network element AMF). Therefore, in this embodiment, the identification information that is of the function network element serving the second device and that is obtained by the GMLC is the identification information of the access management network element. However, this does not constitute a substantial limitation on this application, and the type of the required function network element may be adjusted based on an actual requirement.

Step S803: The GMLC sends a fifth message to a second network element. Optionally, the fifth message includes the identification information of the second device.

Optionally, the fifth message may be location positioning information request message (Namf_Location_ProvidePositioningInfo Request).

In this step, if finding that the second device is in idle state CM-IDLE, the access management network element triggers a network triggered service request (network triggered service request), and pages the second device back to a connected state CM-CONNECTED.

Optionally, the second network element may be an access management network element (for example, an AMF network element), or may be an LMF network element.

Optionally, the identification information of the second device includes one or more of a generic public subscription identifier (generic public subscription identifier, GPSI), a subscription permanent identifier (subscription permanent identifier, SUPI), and a type of the LCS client.

Step S804: The second network element sends a fourth message to a network storage network element. The fourth message is used to discover or obtain the access management network element.

It should be understood that, the discovering or obtaining the access management network element described in this embodiment of this application may be discovering or obtaining information about the access management network element. The information about the access management network element may be related information of the access management network element, for example, may be identification information of the access management network element, may be a part or all of configuration information (network function profile, NF profile) of the access management network element, or the like.

Optionally, the fourth message is used to discover or query one or more access management network elements that include the first device in a reference area (for example, a cell) in which the second device is located. The fourth message includes information (for example, identification information (which may be, for example, a CGI) of the cell) about the reference area in which the second device is located.

Optionally, the fourth message further includes other reference area information (for example, a base station identifier (an NG-RAN ID or a gNB ID) or a paging area identifier (for example, a TAC or a TAI)) of the second device. The second device includes a to-be-positioned terminal device, a positioned device, the first device, a target device, or the like.

Optionally, the fourth message includes fifth information, and the fifth information indicates that an access management network element that needs to be obtained or discovered is an access management network element in which the first device exists.

Further, optionally, the fifth information specifically indicates that the access management network element that needs to be obtained or discovered is an access management network element that includes the first device in the reference area of the second device. To be specific, the fifth information specifically indicates that the first device exists in the access management network element that needs to be obtained or discovered, and the first device is located in the reference area of the second device. It should be understood that, an explanation of the reference area of the second device is the same as the corresponding explanation in the summary and the explanation of the reference area of the first device described in step S402 in the embodiment shown in FIG. 4. For brevity, details are not described herein again.

Optionally, the fourth message includes a network function discovery request (Nnrf_NFDiscovery_Request Request). The fourth message further includes a network function list retrieval (Nnrf_NFManagement_NFListRetrieval Request) or a network function profile retrieval (Nnrf_NFManagement_NFProfileRetrieval Request). Alternatively, the fourth message may be another message having a same function, for example, may be another message having a different message name but a same or similar function. This is not limited in this application.

It should be understood that "obtaining" in this embodiment of this application includes any term that has an obtaining function, for example, query, discovery, and retrieval. This is not limited in this application.

It should be understood that the access management network element in this embodiment of this application may be an access and mobility management function network element, and the network storage network element may be a network repository function (network repository function, NRF) network element. In a future 5G or 6G network, other names may alternatively be used. This is not limited in this application.

It should be understood that verbs such as "indicate" and "exist" in this embodiment of this application constitute no limitation on this application, and may be replaced with any term that is the same as or similar to expressions thereof. For example, "indicate" may also be replaced with "notify", and "exist" may be replaced with "include, contain, registered, or register". This is not limited in this application.

Optionally, the fourth message may further include a network function discovery request (Nnrf_NFDiscovery_Request Request), or may be a new message specially used for a function described in the fourth message. This is not limited in this application.

Step S805: The network storage network element discovers or queries the one or more access management network elements that include the first device in the reference area of the second device, and sends a feedback message of the fourth message to a network management network element.

Optionally, the feedback message of the fourth message includes the access management network elements that are found or queried by the network management network element and that include the first device in the reference area of the second device.

Optionally, the feedback message of the fourth message may include a network function discovery request response (Nnrf_NFDiscovery_Response), a network function list retrieval response (Nnrf_NFManagement_NFListRetrieval Response), or a network function profile retrieval response (Nnrf_NFManagement_NFProfileRetrieval Response), or may be a new message. A function of the new message is the same as or similar to that of the feedback message of the fourth message. This is not limited in this application.

Optionally, this embodiment is implemented based on the embodiment shown in FIG. 5 or FIG. 6. More specifically, implementation of step S804 and step S805 in this embodiment depends on the second message in the embodiment shown in FIG. 5 or FIG. 6.

Step S806: The second network element obtains information (which may be, for example, a part or all of configuration information of the access management network element, and may include the identification information of the access management network element) about the access management network element based on the feedback message of the fourth message. That is, the information about the access management network element is included in the feedback message of the fourth message. The information about the access management network element may include the identification information of the access management network element, and may further include the configuration information of the access management network element. The second network element sends a first request message (Namf_Location_ProvidePositioningInfo Request) to the access management network element. The first request information includes a location positioning information request, and is used to request the first device to perform positioning measurement. The first request message includes information about the second network element and information about the second device.

Optionally, the first request message further includes one or more of the information (for example, the identification information of the cell in which the second device is located) about the reference area of the second device, required quality of service information, the identification information (for example, an ID of a campus access management network element) of the access management network element, and an LCS correlation identifier (LCS correlation ID).

Optionally, a location management network element may be an LMF (for example, a campus LMF), the access management network element may be an AMF (for example, a campus AMF), and the campus AMF and the campus LMF may be co-deployed. When the campus AMF and the campus LMF are co-deployed, the first request message may include only identification information of the campus LMF or identification information of the campus AMF.

Step S807: The access management network element sends downlink non-access stratum transport (DL NAS Transport) to the second device. The downlink non-access stratum transport includes a part of parameters carried in the first request message in step S806. To be specific, the downlink non-access stratum transport is used to request the first device to perform positioning measurement, and the first request message may include identification information of the location management network element and the identification information of the second device.

Optionally, the downlink non-access stratum transport further includes one or more of required quality of service information (required QoS), the LCS correlation identifier, identification information of the campus access management network element, and the location information of the first device.

Step S808: The first device interacts with the location management network element to initialize secure user plane location (secure user plane location, SUPL).

Optionally, the location management network element may be the campus LMF, and the access management network element may be the campus AMF. After the first device receives the identification information of the campus LMF or the identification information of the campus AMF, the first device performs the SUPL initialization with the campus LMF.

Optionally, for example, the network storage network element is an NRF network element, and the access management network element is an AMF network element. The first device sends a secure user plane location enabled terminal initialization (SUPL enabled terminal initialization, SUPL SET INIT) message to the campus LMF. The SUPL SET INIT message may include the identification information (for example, an SUPI) of the first device. The campus LMF may retrieve an NF profile of the first device from the NRF based on the identification information of the first device, then further find, based on the NF profile of the first device, an AMF network element serving the first device, and authenticate the first device by the AMF network element.

Optionally, when an authentication result is success, step S809 is performed.

It should be understood that, in the foregoing optional example, the authentication means that the AMF network element (namely, the access management network element) decides whether the first device can serve as a positioning reference unit. When this embodiment is based on the embodiment shown in FIG. 4 or FIG. 5, this authentication process may be considered as secondary authentication on the first device.

Further, optionally, a specific authentication procedure may be as follows.
1. The location management network element sends a sixth message to the access management network element. The sixth message is used to indicate the access management network element to authenticate the first device.
   Optionally, the authentication is to decide whether related information of the first device (for example, context information of the first device) includes second information. The second information indicates a capability of the first device. Capability information of the first device indicates whether the first device can serve as the positioning reference unit. When the related information of the first device includes the second information, it may be considered that the authentication result for the first device succeeds. Optionally, the sixth message includes the identification information of the first device.
2. The location management network element receives a feedback message of the sixth message that is sent by the access management network element.

Optionally, the feedback message of the sixth message includes the authentication result for the first device and the location information of the first device, and the location information of the first device is location information that is obtained by the access management network element and stored into the related information of the first device.

Optionally, the related information of the first device may be registration information of the first device, subscription information of the first device, or the like.

Step S809: After the first device performs the SUPL initialization with the access management network element, the first device performs positioning measurement.

Step S810: After performing the positioning measurement, the first device sends a seventh message to the location management network element. The seventh message may include location information of the second device and/or the location information of the first device and/or positioning measurement information of the first device that are/is measured by the first device.

The location information of the device is explained as described in the first aspect of the summary, and details are not described herein again.

Optionally, the seventh message may further include the identification information of the second device.

Optionally, the location management network element may be the campus LMF, the access management network element may be the campus AMF, and the campus AMF and the campus LMF may be co-deployed. When the campus AMF and the campus LMF are co-deployed, the positioning reference unit may also send the seventh message to the campus AMF.

Step S811: The location management network element determines whether the location information of the first device meets a first condition. If the location information of the first device meets the first condition, it may be considered that the location information of the second device and/or the location measurement information of the first device that are/is measured by the first device are/is correct, and step S812 is further performed.

Optionally, that the location information of the first device meets the first condition includes that the location information of the first device meets a first error range.

Optionally, the first condition may include, for example, that the location information of the first device is greater than, less than, or equal to a specific value; for another example, the location information of the first device belongs to or does not belong to a range; for another example, an error between the location information of the first device and the location information in the subscription information or the preconfigured information of the first device is greater than, less than, or equal to a specific value or a specific range. This is not limited in this application.

Optionally, the related information of the first device may be the registration information of the first device, the subscription information of the first device, or the like.

Step S812: The access management network element sends an N2 message related to the second device to the access network device. The N2 message carries one or more of the identification information of the access management network element (which may be, for example, the campus AMF), the identification information of the location management network element (which may be, for example, the campus LMF), an NR positioning protocol A (NR positioning protocol A, NRPPa) message, and the LCS correlation identifier.

Optionally, the location management network element may be the campus LMF, the access management network element may be the campus AMF, and the campus AMF and the campus LMF may be co-deployed. When the campus AMF and the campus LMF are co-deployed, the N2 message related to the second device carries one or more of the identification information of the AMF, the identification information of the campus LMF, the NRPPa message, and the LCS correlation identifier.

Step S813: The access network device performs positioning measurement on the second device.

Step S814: After performing positioning measurement on the second device, the access network device sends a positioning measurement result to the access management network element by using the N2 message related to the second device, and the access management network element further sends the measurement result to the location management network element.

Step S815: The access management network element sends a downlink non-access stratum transport message to the second device. The downlink non-access stratum transport message carries one or more of the identification information of the access management network element, the identification information of the location management network element, an LPP message, and the LCS correlation identifier (LCS correlation ID).

Optionally, the location management network element may be the campus LMF, the access management network element may be the campus AMF, and the campus AMF and the campus LMF may be co-deployed. When the campus AMF and the campus LMF are co-deployed, the downlink non-access stratum transport message carries one or more of the identification information of the campus AMF, the identification information of the campus LMF, the LPP message, and the LCS correlation identifier (LCS correlation ID).

Step S816: The second device performs positioning measurement on the second device.

Step S817: After performing the positioning measurement on the second device, the second device sends a positioning result to the campus access management network element by using the user plane SUPL message. The user plane SUPL message carries the identification information of the second device and positioning measurement result information of the second device for the second device.

Step S818: The location management network element summarizes the location measurement result of the first device for the second device, the positioning measurement result for the first device, the positioning measurement result of the access network device for the second device, and the positioning measurement result of the second device for the second device, to obtain a final positioning measurement result for the second device.

It should be understood that there is no strict limitation on a sequence of steps S812 to S814 and steps S815 to S817. Steps S812 to S814 may be performed simultaneously with steps S815 to S817, steps S812 to S814 may be performed before steps S815 to S817, or steps S815 to S817 may be performed before steps S812 to S814.

In addition, there is no strict limitation on a sequence of steps S806 to S811 and steps S812 to S817. Steps S806 to S811 may be performed simultaneously with steps S812 to S817, steps S806 to S811 may be performed before steps S812 to S817, or steps S812 to S817 may be performed before steps S806 to S811.

Optionally, this embodiment of this application may not include the process of authenticating the first device in step S808.

It should be understood that this embodiment of this application is only a preferred embodiment provided in this application. Omission, division, or sequence adjustment of steps that are made based on this embodiment and that do not affect implementation of the technical solution all fall within the scope of this application.

In this embodiment of this application, optionally, the first device, the second device, and a radio access network may separately perform positioning measurement on the second device, and the first device also performs positioning measurement on the first device, to obtain four positioning measurement results. The location management network element may obtain the final positioning measurement result for the second device based on the four positioning measurement results. The first device used to perform the positioning measurement may be authorized or authenticated before performing a positioning operation. To be specific, before the first device is used for positioning, a trustworthiness level (which may include, for example, the capability of the first device and/or the location information of the first device) of the first device for positioning may be first decided. If the trustworthiness level meets a requirement, the positioning operation is performed. In this way, accuracy of a location measurement result for the second device is improved.

For example, based on the embodiment shown in FIG. 8A and FIG. 8B, this application provides a communication method 900. The method 900 includes the following steps.

Step S901 to step S903 are the same as step S801 to step S803 in the embodiment shown in FIG. 8A and FIG. 8B. For brevity, details are not described herein again.

Step S904: The second network element sends a fourth message to a network storage network element. The fourth message is used to discover or obtain a first device.

It should be understood that the discovering or obtaining a first device described in this embodiment of this application may be discovering or obtaining information about the first device. The information about the first device may be related information of the first device, for example, may be a part or all of registration information of the first device, may be a part or all of subscription information of the first device, may be a part or all of context information of the first device, may be related information of another first device, or the like. The information about the first device may include identification information of the first device, and the like.

Optionally, the fourth message is used to discover or query one or more first devices that exist in a reference area (for example, a cell) in which the second device is located, and the fourth message includes information about the reference area of the second device, for example, may be identification information (which may be, for example, a CGI) of the cell in which the second device is located.

Optionally, the fourth message further includes other reference area information (for example, a base station identifier (an NG-RAN ID or a gNB ID) or a paging area identifier (for example, a TAC or a TAI)) of the second device. The second device includes a to-be-positioned terminal device, a positioned device, a target device, the first device, or the like.

Optionally, the fourth message includes fourth information, and the fourth information indicates that a type of a network function that needs to be discovered or obtained is the first device.

Further, optionally, the fourth message further includes sixth information, and the sixth information indicates that the first device is a first device that exists in the reference area of the second device. It should be understood that, an explanation of the reference area of the second device is the same as the corresponding explanation in the summary and the explanation of the reference area of the first device described in step S402 in the embodiment shown in FIG. 4. For brevity, details are not described herein again.

Optionally, the fourth message may include a network function discovery request (Nnri_NFDiscovery_Request Request).

Optionally, the fourth message may include a network function list retrieval (Nnrf_NFManagement_NFListRetrieval Request) or a network function profile retrieval (Nnrf_NFManagement_NFProfileRetrieval Request).

Optionally, the fourth message may alternatively be another message having a same function, for example, another message having a different message name but a same or similar function. This is not limited in this application. It should be understood that "obtaining" in this embodiment of this application includes any term that has an obtaining function, for example, query, discovery, and retrieval. This is not limited in this application.

It should be understood that the access management network element in this embodiment of this application may be an access and mobility management function network element AMF, and the network storage network element may be a network repository function network element NRF. In a future 5G or 6G network, other names may alternatively be used. This is not limited in this application.

It should be understood that verbs such as "indicate" and "exist" in this embodiment of this application constitute no limitation on this application, and may be replaced with any term that is the same as or similar to expressions thereof. For example, "indicate" may also be replaced with "notify", and "exist" may be replaced with "include, contain, registered, or register". This is not limited in this application.

Optionally, the fourth message may further include a network function query request, may be a network function configuration information retrieval request, or may be a new message specially used for the function described in the fourth message. This is not limited in this application.

Step S905: The network storage network element queries one or more first devices that exist in the reference area of the second device, and sends a feedback message of the fourth message to a network management network element.

Optionally, the feedback message of the fourth message includes the first devices that are found or queried by the network management network element and that exist in the reference area of the second device.

Optionally, the feedback message of the fourth message may include a network function discovery response (Nnrf_NFDiscovery_Request response), or may include a network function list retrieval response (Nnrf_NFManagement_NFListRetrieval response) or a network function profile retrieval response (Nnrf_NFManagement_NFProfileRetrieval response). The fourth message may alternatively be a new message. A function of the new message is the same as or similar to that of the feedback message of the fourth message. This is not limited in this application. Optionally, this embodiment is implemented based on the embodiment shown in FIG. 5 or FIG. 6. More specifically, implementation of step S904 and step S905 in this embodiment depends on the second message in the embodiment shown in FIG. 5 or FIG. 6.

Step S906: The second network element first obtains information about the one or more first devices based on the feedback message of the fourth message. The information about the first device may be related information of the first device, for example, may be a part or all of a registration message of the first device, may be a part or all of a subscription message of the first device, or may be a part or all of a context of the first device. The related information of the first device includes identification information of an access management network element serving the first device. Further, the second network element obtains identification information of the access management network element. Then, the second network element sends a first request message to the access management network element. The first request information includes a location positioning information request, and is used to request the first device to perform positioning measurement and/or measure a location of the second device. The first request message includes identification information of a location management network element and identification information of the second device.

Optionally, the first request message further includes one or more of the information (for example, the identification information of the cell in which the second device is located) about the reference area of the second device, required quality of service information, the identification information (for example, an ID of a campus access management network element) of the access management network element, and an LCS correlation identifier (LCS correlation ID).

Optionally, the location management network element may be an LMF (for example, a campus LMF), the access management network element may be an AMF (for example, a campus AMF), and the campus AMF and the campus LMF may be co-deployed. When the campus AMF and the campus LMF are co-deployed, the first request message may include only identification information of the campus LMF or identification information of the campus AMF.

Step S907 to step S918 are the same as step S807 to step S818 in the embodiment shown in FIG. 8A and FIG. 8B. For brevity, details are not described herein again.

It should be understood that there is no strict limitation on a sequence of steps S912 to S914 and steps S915 to S917. Steps S912 to S914 may be performed simultaneously with steps S915 to S917, steps S912 to S914 may be performed before steps S915 to S917, or steps S915 to S917 may be performed before steps S912 to S914.

In addition, there is no strict limitation on a sequence of steps S906 to S911 and steps S912 to S917. Steps S906 to S911 may be performed simultaneously with steps S912 to S917, steps S906 to S911 may be performed before steps S912 to S917, or steps S912 to S917 may be performed before steps S906 to S911.

It should be understood that this embodiment of this application is only a preferred embodiment provided in this application. Omission, division, or sequence adjustment of steps that are made based on this embodiment and that do not affect implementation of the technical solution all fall within the scope of this application.

In this embodiment of this application, the first device, the second device, and a radio access network may separately perform positioning measurement on the second device, and the first device may also perform positioning measurement on the first device, to obtain four positioning measurement results. The location management network element may obtain the final positioning measurement result for the second device based on the four positioning measurement results. The first device used to perform the positioning measurement may be authorized or authenticated before performing a positioning operation. To be specific, before the first device is used for positioning, a trustworthiness level (which may include, for example, the capability of the first device and/or the location information of the first device) of the first device for positioning may be first decided. If the trustworthiness level meets a requirement, the positioning operation is performed. In this way, accuracy of a location measurement result for the second device is improved.

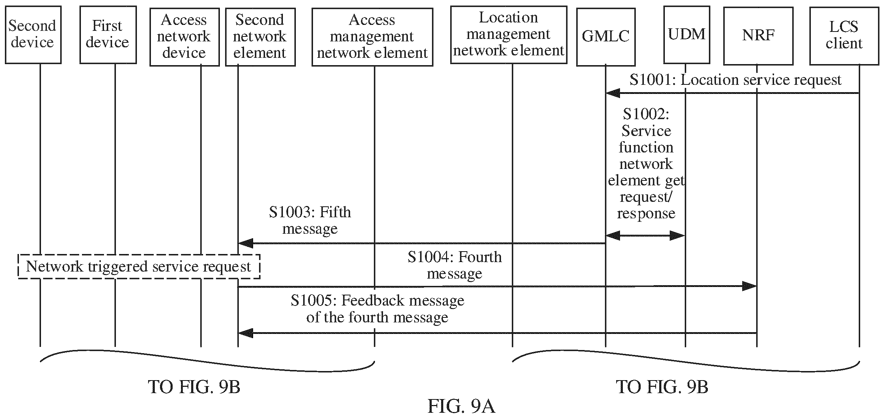

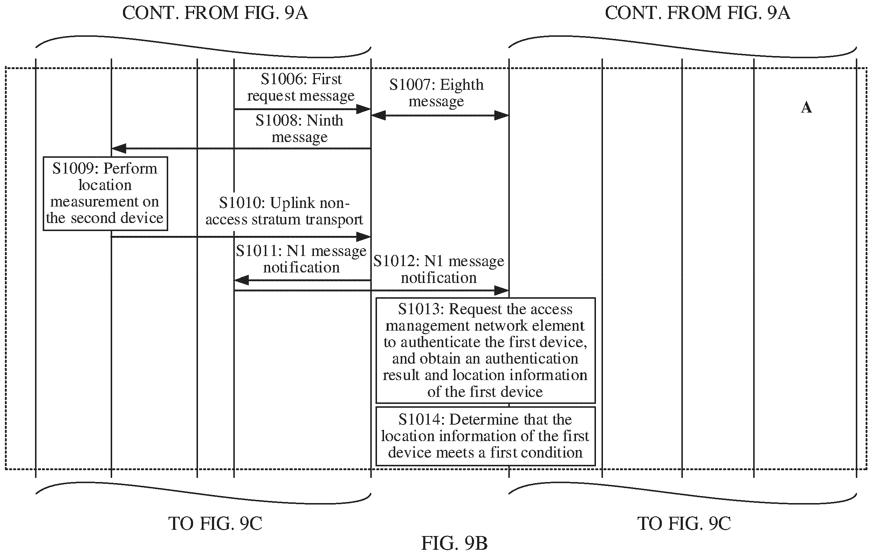

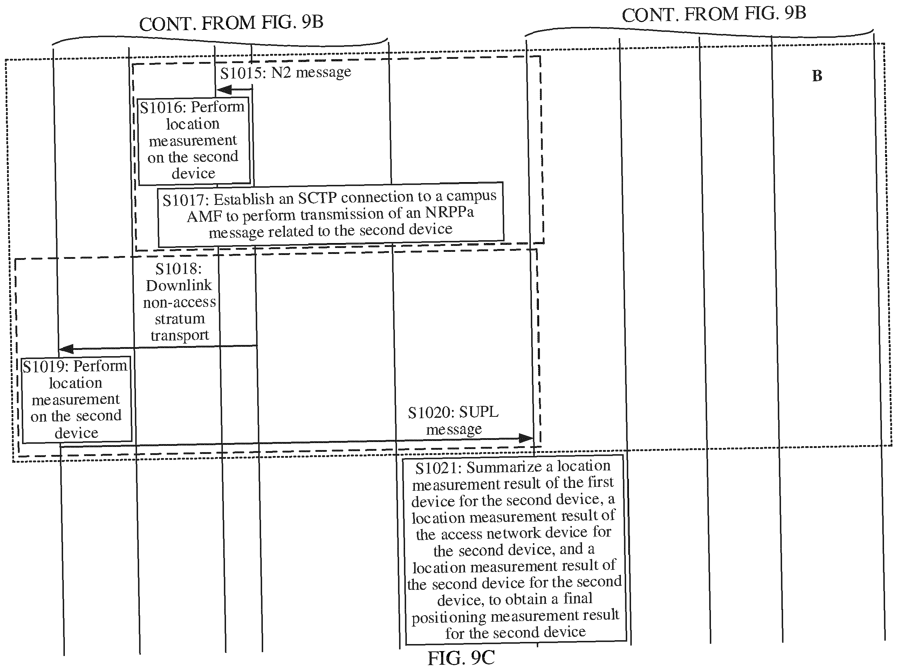

Based on the embodiments shown in FIG. 5 and FIG. 6, and corresponding to the embodiment shown in FIG. 8A and FIG. 8B, for example, FIG. 9A to FIG. 9C are an interaction diagram of a communication method 1000 according to this application. As shown in FIG. 9A to FIG. 9C, the method 1000 includes the following steps.

Step S1001: An LCS client sends a location service request message (LCS service request) to a GMLC. The location service request message includes identification information of a second device and/or required QoS information.

Optionally, the second device is a to-be-positioned device, a positioned device, or a target device, and may include a terminal device or a first device.

Optionally, the identification information of the second device may include one or more of a GPSI, an SUPI, an IMSI, a PEI, and an SUCI.

Optionally, the required QoS information includes one or more of accuracy (for example, a centimeter, a decimeter, or a meter) of a location measurement result for the second device, feedback duration (for example, immediate feedback or feedback after a period of time) of the location measurement result for the second device, and a supported geographical area description (geographical area description, GAD) (for example, GPS location coordinates in longitude and latitude).

Step S1002: The GMLC sends a service function network element get request (Nudm_UECM_Get request) to a UDM to obtain identification information of a function network element required to serve the second device.

Optionally, the service function network element get request message includes the identification information of the second device and/or a type of the required function network element.

It should be understood that, in this embodiment of this application, a type of the function network element obtained by the GMLC is a type of the function network element required to carry the identification information of the second device. The type of the required function network element in this embodiment is an access management network element (for example, an access and mobility management function network element AMF). Therefore, in this embodiment, the identification information that is of the function network element serving the second device and that is obtained by the GMLC is the identification information of the access management network element. However, this does not constitute a substantial limitation on this application, and the type of the required function network element may be adjusted based on an actual requirement.

Step S1003: The GMLC sends a fifth message to a second network element. Optionally, the fifth message includes the identification information of the second device.

Optionally, the fifth message may be location positioning information request message (Namf_Location_ProvidePositioningInfo request).

In this step, if finding that the second device is in idle state CM-IDLE, the access management network element triggers a network triggered service request (network triggered service request), and pages the second device back to a connected state CM-CONNECTED.

Optionally, the second network element may be an access management network element (for example, an AMF network element), or may be an LMF network element.

Optionally, the identification information of the second device includes one or more of a generic public subscription identifier (generic public subscription identifier, GPSI), a subscription permanent identifier (subscription permanent identifier, SUPI), and a type of the LCS client.

Step S 1004: The second network element sends a fourth message to a network storage network element. The fourth message is used to discover or obtain the access management network element.

It should be understood that the discovering or obtaining the access management network element described in this embodiment of this application may be discovering or obtaining information about the access management network element. The information about the access management network element may be related information of the access management network element, for example, may be a part or all of configuration information (NF profile) of the access management network element (where the configuration information of the access management network element may include the identification information of the access management network element) or the like.

Optionally, the fourth message is used to discover or query an access management network element that includes one or more first devices in a reference area of the second device (for example, a cell of the second device). The fourth message may include information (for example, identification information (which may be, for example, a CGI) of the cell) about the reference area in which the second device is located.

Optionally, the fourth message further includes other reference area information (for example, a base station identifier (for example, a gNB ID), a paging area identifier (for example, a TAC or a TAI), or a public land mobile network identifier (for example, a PLMN)) of the second device. The second device includes the to-be-positioned terminal device, the positioned device, the target device, or the first device.

Optionally, the fourth message includes fifth information, and the fifth information indicates that an access management network element that needs to be discovered or obtained is an access management network element in which the first device exists.

Further, optionally, the fifth information specifically indicates that the access management network element that needs to be obtained is an access management network element that includes the first device in the reference area of the second device. To be specific, the fifth information specifically indicates that the first device exists in the access management network element that needs to be discovered or obtained, and the first device is located in the reference area of the second device. It should be understood that, an explanation of the reference area of the second device is the same as the explanation of the reference area of the device in the summary and the explanation of the reference area of the first device described in step S402 in the embodiment shown in FIG. 4. For brevity, details are not described herein again.

Optionally, the fourth message may include a network function discovery request (Nnrf_NFDiscovery_Request Request). Optionally, the fourth message may alternatively include a network function list retrieval (Nnrf_NFManagement_NFListRetrieval Request) or a network function profile retrieval (Nnrf_NFManagement_NFProfileRetrieval Request). Optionally, the fourth message may alternatively be another message having a same function, for example, another message having a different message name but a same or similar function. This is not limited in this application.

It should be understood that "obtaining" in this embodiment of this application includes any term that has an obtaining function, for example, query, discovery, and retrieval. This is not limited in this application.

It should be understood that the access management network element in this embodiment of this application may be an access and mobility management function network element AMF, and the network storage network element may be a network repository function network element NRF. In a future 5G or 6G network, other names may alternatively be used. This is not limited in this application.

It should be understood that verbs such as "indicate" and "exist" in this embodiment of this application constitute no limitation on this application, and may be replaced with any term that is the same as or similar to expressions thereof. For example, "indicate" may also be replaced with "notify", and "exist" may be replaced with "include, contain, registered, or register". This is not limited in this application.

Optionally, the fourth message may alternatively include a network function query request (Nnrf_NFDiscovery_Request Request), a network function list retrieval request (Nnrf_NFManagement_NFListRetrieval Request), or a network function profile retrieval request (Nnrf_ NFManagement_NFProfileRetrieval Request), or may be a new message specially used for a function described in the fourth message. This is not limited in this application.

Step S 1005: The network storage network element discovers or queries one or more access management network elements that exist in the reference area of the second device, and sends a feedback message of the fourth message to a network management network element.

Optionally, the feedback message of the fourth message includes the access management network elements that are found or queried by the network management network element and that include the first device in the reference area of the second device.

Optionally, the feedback message of the fourth message may include a network function query request response (Nnrf_NFDiscovery_Request Response), a network function list retrieval request response (Nnrf_NFManagement_NFListRetrieval Response), or a network function profile retrieval response (Nnrf_NFManagement_NFProfileRetrieval Response), or may be a new message. A function of the new message is the same as or similar to that of the feedback message of the fourth message. This is not limited in this application.

Optionally, this embodiment is implemented based on the embodiment shown in FIG. 5 or FIG. 6. More specifically, implementation of step S 1004 and step S 1005 in this embodiment depends on the second message in the embodiment shown in FIG. 5 or FIG. 6.

Step S1006: The second network element obtains information (which may be, for example, a part or all of configuration information of the access management network element, and may include the identification information of the access management network element) about the access management network element based on the feedback message of the fourth message. That is, the information about the access management network element is included in the feedback message of the fourth message. The second network element sends a first request message to the access management network element. The first request information includes a location positioning information request, and is used to request first device positioning measurement. The first request message includes identification information of a location management network element and identification information of the second device.

Optionally, the first request message further includes one or more of the information (for example, the identification information of the cell in which the second device is located) about the reference area of the second device, required quality of service information, the identification information (for example, an ID of a campus access management network element) of the campus access management network element, and an LCS correlation identifier (LCS correlation ID).

Optionally, the location management network element may be an LMF (for example, a campus LMF), the access management network element may be an AMF (for example, a campus AMF), and the campus AMF and the campus LMF may be co-deployed. When the campus AMF and the campus LMF are co-deployed, the first request message may include only identification information of the campus LMF or identification information of the campus AMF.

Step S 1007: The access management network element sends an eighth message to the location management network element. The eighth message includes the identification information of the first device, the location information of the first device, and the identification information of the access management network element. After receiving the eighth message, the location management network element sends a feedback message of a seventh message to the access management network element.

Step S1008: The access management network element sends a ninth message to the first device. The ninth message is used by the first device to perform positioning measurement.

Optionally, the access management network element sends a downlink non-access stratum transport message to the first device. The downlink non-access stratum transport message includes the identification information of the second device and the identification information of the location management network element.

Optionally, the downlink non-access stratum transport message further includes the required quality of service information and/or the LCS correlation identifier.

Step S1009: After receiving the downlink non-access stratum transport message, the first device performs positioning measurement.

Optionally, the first device may perform location measurement on the second device based on the identification information of the second device.

Step S1010: After the first device completes the positioning measurement, the first device sends an uplink non-access stratum transport message to the access management network element. The uplink non-access stratum transport message includes a result of first device positioning measurement and the location information of the first device.

Optionally, the uplink non-access stratum transport message further includes the identification information of the first device and/or the identification information of the second device.

Step S1011: After receiving the uplink non-access stratum transport, the access management network element sends an N1 message notification (Namf_Communication_N1MessageNotify) to the second network element. The N1 message notification includes the positioning measurement result of the first device.

Optionally, the N1 message notification further includes one or more of the identification information of the second device, the identification information of the first device, and the location information of the first device.

Step S1012: After receiving the N1 message notification, the access management network element forwards the N1 message notification to the location management network element.

Optionally, in step S1010, after the first device completes the location measurement of the second device, the first device may directly send the uplink non-access stratum transport message to the location management network element. That is, step S1011 and step S1012 may not be performed.

Step S1013: Based on the identification information of the access management network element that is obtained in step S1007, the location management network element indicates the access management network element to authenticate the first device and update the location information of the first device, and send an authentication result and updated location information of the first device to the location management network element. When the authentication result received by the location management network element is success, step S 1014 is further performed.

That the access management network element updates the location information of the first device means that the access management network element obtains the location information of the first device from information stored in the first device, and sends the location information to the location management network element, to overwrite the location information of the first device that is received by the location management network element through the eighth message. In this way, the location information of the first device is updated. A procedure in which the access management network element authenticates the first device is the same as the authentication procedure in step S808 in the embodiment shown in FIG. 8A and FIG. 8B. For brevity, details are not described herein again.

Optionally, the information about the first device may be related information of the first device. For example, the related information of the first device may be a part or all of registration information of the first device, a part or all of subscription information of the first device, a part or all of a context of the first device, or the like.

Step S1014: The location management network element determines whether the location information of the first device meets a first condition. If the location information of the first device meets the first condition, it may be considered that the location information of the second device that is measured by the first device is correct, and step S1015 is further performed.

Optionally, the first condition may include, for example, that the location information of the first device is greater than, less than, or equal to a specific value; for another example, the location information of the first device belongs to or does not belong to a range; for another example, an error between the location information of the first device and the location information in the subscription information or the preconfigured information of the first device is greater than, less than, or equal to a specific value or a specific range. This is not limited in this application.

Step S1015 to step S1021 are the same as step S812 to step S818 in the embodiment shown in FIG. 8A and FIG. 8B. For brevity, details are not described herein again.

It should be understood that there is no strict limitation on a sequence of steps S 1015 to S1017 and steps S1018 to S1020. Steps S1015 to S1017 may be performed simultaneously with steps S1018 to S1020, steps S1015 to S1017 may be performed before steps S1018 to S1020, or steps S1018 to S1020 may be performed before steps S1015 to S 1017.

In addition, there is no strict limitation on a sequence of performing a procedure shown in a processing block A and a procedure shown in a processing block B. A may be performed before B, B may be performed before A, or A and B may be simultaneously performed. This is not limited.

It should be understood that this embodiment of this application is only a preferred embodiment provided in this application. Omission, division, or sequence adjustment of steps that are made based on this embodiment and that do not affect implementation of the technical solution all fall within the scope of this application.

In this embodiment of this application, the first device, the second device, and a radio access network may separately perform positioning measurement on the second device, and the first device may also perform positioning measurement on the first device, to obtain four positioning measurement results. The location management network element may obtain the final positioning measurement result for the second device based on the four positioning measurement results. The first device used to perform the positioning measurement may be authorized or authenticated before performing a positioning operation. To be specific, before the first device is used for positioning, a trustworthiness level (which may include, for example, the capability of the first device and/or the location information of the first device) of the first device for positioning may be first decided. If the trustworthiness level meets a requirement, the positioning operation is performed. In this way, accuracy of a location measurement result for the second device is improved.

For example, based on the embodiment shown in FIG. 9A to FIG. 9C, an embodiment of this application provides a communication method 1100. The method 1100 includes the following steps.

Step S1101 to step S 1103 are the same as step S1001 to step S 1003 in the embodiment shown in FIG. 9A to FIG. 9C. For brevity, details are not described herein again.

Step S 1104: The second network element sends a fourth message to a network storage network element. The fourth message is used to discover or obtain a first device.

It should be understood that the discovering or obtaining a first device described in this embodiment of this application may be discovering or obtaining information about the first device. The information about the first device may be related information of the first device, for example, may be a part or all of registration information of the first device; for example, may be a part or all of subscription information of the first device; or for example, may be a part or all of a context of the first device. The information about the first device may alternatively be identification information of the first device, or the like.

Optionally, the fourth message is used to discover or query one or more first devices that exist in a reference area of a second device (for example, a cell of the second device). The fourth message may include information (for example, identification information (which may be, for example, a CGI) of the cell) about the reference area in which the second device is located.

Optionally, the fourth message may further include other reference area information (for example, a base station identifier (for example, a gNB ID), a paging area identifier (for example, a TAC or a TAI), or a public land mobile network identifier (for example, a PLMN)) of the second device. The second device includes a to-be-positioned terminal device, a positioned device, a target device, or the first device.

Optionally, the fourth message includes fourth information, and the fourth information indicates that a type of a network function that needs to be obtained is the first device.

Further, optionally, the fourth message further includes sixth information, and the sixth information indicates that the first device is a first device that exists in the reference area of the second device. It should be understood that, an explanation of the reference area of the second device is the same as the explanation of the reference area of the device in the summary and the explanation of the reference area of the first device described in step S402 in the embodiment shown in FIG. 4. For brevity, details are not described herein again.

Optionally, the fourth message may include a network function discovery request (Nnrf_NFDiscovery_Request Request).

Optionally, the fourth message further includes a network function list retrieval (Nnrf_NFManagement_NFListRetrieval Request) or a network function profile retrieval (Nnrf_NFManagement_NFProfileRetrieval Request).

Optionally, the fourth message may alternatively be another message having a same function, for example, another message having a different message name but a same or similar function. This is not limited in this application.

It should be understood that "obtaining" in this embodiment of this application includes any term that has an obtaining function, for example, query, discovery, and retrieval. This is not limited in this application.

It should be understood that the access management network element in this embodiment of this application may be an access and mobility management function network element, and the network storage network element may be a network repository function network element NRF. In a future 5G or 6G network, other names may alternatively be used. This is not limited in this application.

It should be understood that verbs such as "indicate" and "exist" in this embodiment of this application constitute no limitation on this application, and may be replaced with any term that is the same as or similar to expressions thereof. For example, "indicate" may also be replaced with "notify", and "exist" may be replaced with "include, contain, registered, or register". This is not limited in this application.

Optionally, the fourth message may alternatively include a network function discovery request (Nnrf_NFDiscovery_Request Request), a network function configuration information retrieval request (Nnrf_NFManagement_NFProfileRetrieval Request), or a network function list retrieval request (Nnrf_NFManagement_NFListRetrieval Request), or may be a new message specially used for a function described in the fourth message. This is not limited in this application.

Step S 1105: The network storage network element discovers or queries the one or more first devices that exist in the reference area of the second device, and sends a feedback message of the fourth message to a network management network element.

Optionally, the feedback message of the fourth message includes the first devices that are found/queried by the network management network element and that exist in the reference area of the second device.

Optionally, the feedback message of the fourth message may include a network function query request response (Nnrf_NFDiscovery_Request Response), a network function configuration information retrieval response (Nnrf_NFManagement_NFProfileRetrieval Response), or a network function list retrieval request response (Nnrf_NFManagement_NFListRetrieval Response), or may be a new message. A function of the new message is the same as or similar to that of the feedback message of the fourth message. This is not limited in this application. Optionally, this embodiment is implemented based on the embodiment shown in FIG. 5 or FIG. 6. More specifically, implementation of step S1104 and step S1105 in this embodiment depends on the second message in the embodiment shown in FIG. 5 or FIG. 6.

Step S1106: Based on the feedback message of the fourth message, a second network element first obtains information (which may be, for example, a part or all of configuration information of the access management network element, and may include identification information of the access management network element) about the one or more first devices. Further, the second network element obtains information about the access management network element. Then, the second network element sends a first request message to the access management network element. The first request information includes a location positioning information request, and is used to request the first device to perform positioning measurement. The first request message includes identification information of a location management network element and identification information of the second device.

Optionally, the first request message further includes one or more of the information (for example, the identification information of the cell in which the second device is located) about the reference area of the second device, required quality of service information, the identification information (for example, an ID of a campus access management network element) of the campus access management network element, and an LCS correlation identifier (LCS correlation ID).

Optionally, the location management network element may be an LMF (for example, a campus LMF), the access management network element may be an AMF (for example, a campus AMF), and the campus AMF and the campus LMF may be co-deployed. When the campus AMF and the campus LMF are co-deployed, the first request message may include only identification information of the campus LMF or identification information of the campus AMF.

Step S1107 to step S1121 are the same as step S1007 to step S1021 in the embodiment shown in FIG. 9A to FIG. 9C. For brevity, details are not described herein again.

It should be understood that there is no strict limitation on a sequence of steps S1115 to S1117 and steps S1118 to S1120. Steps S 1115 to S1117 may be performed simultaneously with steps S1118 to S1120, steps S1115 to S1117 may be performed before steps S1118 to S1120, or steps S 1118 to S1120 may be performed before steps S1115 to S1117.

In addition, there is no strict limitation on a sequence of performing a procedure shown in a processing block A and a procedure shown in a processing block B. A may be performed before B, B may be performed before A, or A and B may be simultaneously performed. This is not limited.

It should be understood that this embodiment of this application is only a preferred embodiment provided in this application. Omission, division, or sequence adjustment of steps that are made based on this embodiment and that do not affect implementation of the technical solution all fall within the scope of this application.

In this embodiment of this application, the first device, the second device, and a radio access network may separately perform positioning measurement on the second device, and the first device may also perform positioning measurement on the first device, to obtain four positioning measurement results. The location management network element may obtain the final positioning measurement result for the second device based on the four positioning measurement results. The first device used to perform the positioning measurement may be authorized or authenticated before performing a positioning operation. To be specific, before the first device is used for positioning, a trustworthiness level (which may include, for example, the capability of the first device and/or the location information of the first device) of the first device for positioning may be first decided. If the trustworthiness level meets a requirement, the positioning operation is performed. In this way, accuracy of a location measurement result for the second device is improved.

It may be understood that the examples in FIG. 5 to FIG. 9A to FIG. 9C in embodiments of this application are merely intended to help a person skilled in the art understand embodiments of this application, but are not intended to limit embodiments of this application to specific scenarios in the examples. It is clear that a person skilled in the art can make various equivalent modifications or changes based on the examples in FIG. 5 to FIG. 9A to FIG. 9C, and such modifications or changes also fall within the scope of embodiments of this application.

It should be further understood that the examples in FIG. 5 to FIG. 9A to FIG. 9C in embodiments of this application are merely examples for description, and the examples in the figures do not limit execution sequences. A person skilled in the art may flexibly adjust sequences of the steps based on the examples in the figures. In addition, the sequence numbers of the foregoing processes do not mean an execution sequence, and the execution sequence of the processes should be determined based on functions and internal logic of the processes.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

It should be further understood that the solutions in embodiments of this application may be appropriately combined for use, and explanations or descriptions of terms in embodiments may be mutually referenced or explained in embodiments. This is not limited.

It should be further understood that sequence numbers of the foregoing processes do not mean execution sequences in embodiments of this application. The execution sequences of the processes should be determined based on functions and internal logic of the processes. Various numerical numbers or sequence numbers in the foregoing processes are merely distinguished for ease of description, and should not constitute any limitation on the implementation processes of embodiments of this application.

In the foregoing embodiments provided in this application, various solutions of the communication method provided in embodiments of this application are separately described from perspectives of the network elements and interaction between the network elements. It may be understood that, to implement the foregoing functions, the network elements and the device each include a corresponding hardware structure and/or a corresponding software module for performing each function. A person skilled in the art should easily be aware that, in combination with units and algorithm steps of the examples described in embodiments disclosed in this specification, this application may be implemented by hardware or a combination of the hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

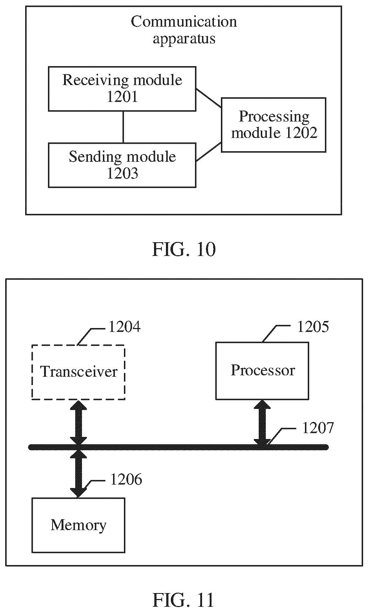

FIG. 10 is a block diagram of a communication apparatus 1200 according to an embodiment of this application. The apparatus 1200 includes a receiving module 1201, and the receiving module 1201 may be configured to implement a corresponding receiving function. The receiving module 1201 may also be referred to as a receiving unit.

Optionally, the apparatus 1200 may further include a processing module 1202. The processing module 1202 may be configured to implement a corresponding processing function, for example, decide whether a first device can serve as a positioning reference unit.

Optionally, the apparatus 1200 may further include a sending module 1203, and the sending module 1203 may be configured to implement a corresponding sending function. The sending module 1203 may also be referred to as a sending unit.

Optionally, the apparatus 1200 further includes a storage unit. The storage unit may be configured to store instructions and/or data. The processing unit 1202 may read the instructions and/or the data in the storage unit, so that the apparatus implements actions of the related apparatus in the foregoing method embodiments.

The apparatus 1200 may be configured to perform actions performed by the access management network element or the network storage network element in the foregoing method embodiments. In this case, the apparatus 1200 may be the access management network element or a component of the access management network element, or may be the component of the network storage network element or a component of the network storage network element. The receiving module 1201 is configured to perform a receiving-related operation of the access management network element or the network storage network element in the foregoing method embodiments. The processing module 1202 is configured to perform a processing-related operation of the access management network element or the network storage network element in the foregoing method embodiments. The sending module 1203 is configured to perform a sending-related operation of the access management network element or the network storage network element in the foregoing method embodiments.

In a design, the apparatus 1200 is configured to perform an action performed by any network element or any device in the foregoing method embodiments. In an embodiment, the communication apparatus may be configured to perform operations of the access management network element in FIG. 4 to FIG. 9A to FIG. 9C. An example is as follows.

The receiving module 1201 is configured to send a second message to a network storage network element. The second message includes first information. The first information indicates that the first device exists in the access management network element, the first information is used to register information about the first device with the network storage network element, or the first information indicates that a type of a network function is a first device. The first device is used for positioning measurement.

Optionally, the receiving module 1201 is configured to receive a first message sent by the first device. The first message includes one or more of a registration request, a service request, and uplink non-access stratum transport.

The processing module 1202 is configured to decide, based on second information, whether the first device can serve as a positioning reference unit. The second information indicates capability information of the first device, and the capability information of the first device indicates whether the first device can serve as the positioning reference unit.

Optionally, if the first device can serve as the positioning reference unit, the processing module 1202 stores the second information into the information about the first device.

Optionally, related information of the first device may be registration information of the first device, subscription information of the first device, or the like.

Optionally, if the first device cannot serve as the positioning reference unit, the processing module 1202 sends third information to the first device. The third information is used to notify that the first device cannot serve as the positioning reference unit.

Optionally, the processing module 1202 is further configured to: if location information of the first device meets a first condition, store the location information of the first device into the information about the first device.

Optionally, the receiving module 1201 is configured to send a third message to a second network element. The third message is used to request to obtain the location information of the first device. After obtaining the location information of the first device, the receiving module 1201 stores the location information of the first device into the information of the first device.

It should be understood that a specific process in which the modules perform the foregoing corresponding steps has been described in detail in the foregoing method embodiments. For brevity, details are not described herein again.

In addition, the receiving module 1201, the processing module 1202, and the sending module 1203 in the communication apparatus may further implement other operations or functions of the access management network element in the foregoing methods. Details are not described herein again.

In another embodiment, the communication apparatus may be configured to perform operations of the network storage network element in FIG. 4 to FIG. 9A to FIG. 9C. An example is as follows.

The receiving module 1101 is configured to receive a fourth message sent by a second network element. The fourth message is used to discover an access management network element.

Optionally, the fourth message includes fifth information, and the fifth information indicates that the access management network element is an access management network element in which the first device exists.

Optionally, the first device includes a positioning reference unit.

Optionally, the fourth message further includes a network function list retrieval or a network function profile retrieval.

Optionally, the receiving module 1101 sends a feedback message of the fourth message to the second network element. The feedback message of the fourth message includes the access management network element in which the first device exists.

Optionally, the including the access management network element may refer to including information about the access management network element, for example, may be all or a part of network function configuration information, or for another example, may be related information of the access management network element. This is not limited in this application.

Optionally, the access management network element of the first device includes the related information of the access management network element of the first device.

Optionally, the fifth information specifically indicates that the access management network element is an access management network element that includes the first device in a reference area of a second device.

Optionally, the second device includes a terminal device.

Optionally, the receiving module 1201 receives a second message sent by the access management network element. The second message includes first information. The first information indicates that the first device exists in the access management network element, the first information is used to register related information of the first device with the receiving module 1201, or the first information indicates that a type of a network function is the first device.

Optionally, information about the first device may be the related information of the first device. The related information of the first device may be registration information of the first device, subscription information of the first device, or the like.

Optionally, the first device is used for positioning measurement.

It should be understood that a specific process in which the modules perform the foregoing corresponding steps has been described in detail in the foregoing method embodiments. For brevity, details are not described herein again.

In addition, the receiving module 1101, the processing module 1102, and the sending module 1103 in the communication apparatus may further implement other operations or functions of the network storage network element in the foregoing methods. Details are not described herein again.

It should be understood that a specific process in which the modules perform the foregoing corresponding steps has been described in detail in the foregoing method embodiments. For brevity, details are not described herein again.

In addition, the receiving module 1101, the processing module 1102, and the sending module 1103 in the communication apparatus may further implement operations or functions of the first device, the second device, the location management network element, the GMLC, and the UDM in the foregoing methods. Details are not described herein again.

FIG. 11 is a diagram of another possible structure of the communication apparatus in the foregoing embodiments. The communication apparatus includes a processor 1205. As shown in FIG. 11, the communication apparatus may further include at least one memory 1206, configured to store program instructions and/or data. The memory 1206 is coupled to the processor 1205. The coupling in this embodiment of this application may be an indirect coupling or a communication connection between apparatuses, units, or modules in an electrical form, a mechanical form, or another form, and is used for information exchange between the apparatuses, the units, or the modules. The processor 1205 may cooperate with the memory 1206. The processor 1205 may execute the program instructions stored in the memory 1206. At least one of the at least one memory may be included in the processor.

The communication apparatus may further include a transceiver 1204, configured to communicate with another device through a transmission medium, so that the apparatus may communicate with another device. Optionally, the transceiver 1204 may be an interface, a bus, a circuit, or an apparatus that can implement a transceiver function. Optionally, the transceiver 1204 may include a receiver and a transmitter.

A specific connection medium between the transceiver 1204, the processor 1205, and the memory 1206 is not limited in this embodiment of this application. In this embodiment of this application, the memory 1206, the processor 1205, and the transceiver 1204 are connected through a bus 1207 in FIG. 11, and the bus is represented by a bold line in FIG. 11. A manner of a connection between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus.

For example, in an embodiment, the processor 1205 is configured to perform other operations or functions of an access management network element. The transceiver 1204 is configured to implement communication between the communication apparatus and another network element (for example, an NRF\a UE\an LMF\a UDM).

In another embodiment, the processor 1205 is configured to perform other operations or functions of a network storage network element. The transceiver 1204 is configured to implement communication between the communication apparatus and another network element (for example, an AMF\a UE\an LMF).

In another embodiment, the processor 1205 is configured to perform other operations or functions of a location management network element. The transceiver 1204 is configured to implement communication between the communication apparatus and another network element (for example, an AMF\a UE\an LMF\a GMLC).

In another embodiment, the processor 1205 is configured to perform other operations or functions of a first device or a second device. The transceiver 1204 is configured to implement communication between the communication apparatus and another network element (for example, an AMF\an LMF\an NRF).

One or more of the foregoing modules or units may be implemented by using software, hardware, or a combination thereof. When any one of the foregoing modules or units is implemented by using the software, the software exists in a form of computer program instructions, and is stored in the memory. The processor may be configured to execute the program instructions and implement the foregoing method procedure. The processor may include but is not limited to at least one of the following types: a central processing unit (central processing unit, CPU), a microprocessor, a digital signal processor (DSP), a microcontroller unit (microcontroller unit, MCU), or various computing devices used for running software, for example, an artificial intelligence processor. Each computing device may include one or more cores used to execute software instructions to perform an operation or processing. The processor may be built in an SoC (system on a chip) or an application-specific integrated circuit (application-specific integrated circuit, ASIC), or may be an independent semiconductor chip. In addition to the core configured to perform the operation or processing by executing software instructions, the processor may further include a necessary hardware accelerator such as a field programmable gate array (field programmable gate array, FPGA), a PLD (programmable logic device), or a logic circuit that implements a dedicated logic operation.

When the foregoing modules or units are implemented by using the hardware, the hardware may be any one or any combination of a CPU, a microprocessor, a DSP, an MCU, an artificial intelligence processor, an ASIC, an SoC, an FPGA, a PLD, a dedicated digital circuit, a hardware accelerator, or a non-integrated discrete device. The hardware may run necessary software or without software to perform the foregoing method procedure.

When the foregoing modules or units are implemented by using the software, all or some of the foregoing modules or units may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid state disk, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

According to the method provided in embodiments of this application, this application further provides a computer program product. The computer program product includes computer program code. When the computer program code is run on a computer, the computer is enabled to perform the method on an access management network element side in the foregoing method embodiments.

According to the method provided in embodiments of this application, this application further provides a computer program product. The computer program product includes computer program code. When the computer program code is run on a computer, the computer is enabled to perform the method on a network storage network element side in the foregoing method embodiments.

According to the method provided in embodiments of this application, this application further provides a computer program product. The computer program product includes computer program code. When the computer program code is run on a computer, the computer is enabled to perform the method on a location management network element side in the foregoing method embodiments.

According to the method provided in embodiments of this application, this application further provides a computer program product. The computer program product includes computer program code. When the computer program code is run on a computer, the computer is enabled to perform the method on a GMLC side in the foregoing method embodiments.

According to the method provided in embodiments of this application, this application further provides a computer program product. The computer program product includes computer program code. When the computer program code is run on a computer, the computer is enabled to perform the method on a first device side or a second device side in the foregoing method embodiments.

According to the method provided in embodiments of this application, this application further provides a computer-readable medium. The computer-readable medium stores program code. When the program code is run on a computer, the computer is enabled to perform the method on an access management network element side in the foregoing method embodiments.

According to the method provided in embodiments of this application, this application further provides a computer-readable medium. The computer-readable medium stores program code. When the program code is run on a computer, the computer is enabled to perform the method on a network storage network element side in the foregoing method embodiments.

According to the method provided in embodiments of this application, this application further provides a computer-readable medium. The computer-readable medium stores program code. When the program code is run on a computer, the computer is enabled to perform the method on a location management network element side in the foregoing method embodiments.

According to the method provided in embodiments of this application, this application further provides a computer-readable medium. The computer-readable medium stores program code. When the program code is run on a computer, the computer is enabled to perform the method on a GMLC side in the foregoing method embodiments.

According to the method provided in embodiments of this application, this application further provides a computer-readable medium. The computer-readable medium stores program code. When the program code is run on a computer, the computer is enabled to perform the method on a first device side or a second device side in the foregoing method embodiments.

An embodiment of this application further provides a processing apparatus, including a processor and an interface. The processor is configured to perform the communication method according to any one of the foregoing method embodiments.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining, by an access management network element, information about a first device; and
sending, by the access management network element, a second message to a network storage network element, wherein the second message comprises first information, and the first information indicates that the first device exists in the access management network element, the first information is used to register the information about the first device with the network storage network element, or the first information indicates that a type of a network function is the first device, wherein the first device is used for positioning measurement.

2. The method according to claim 1, wherein the method further comprises:
receiving, by the access management network element, a first message sent by the first device, wherein the first message comprises one or more of a registration request, a service request, and uplink non-access stratum transport.

3. The method according to claim 1 or 2, wherein the second message further comprises information about a reference area of the first device.

4. The method according to any one of claims 1 to 3, wherein
the first information indicates that the access management network element comprises the first device in the reference area of the first device.

5. The method according to any one of claims 2 to 4, wherein the first message further comprises second information, and the second information indicates a capability of the first device.

6. The method according to claim 5, wherein the method further comprises:
determining, by the access management network element based on the second information, whether the first device can serve as a positioning reference unit or a positioning reference device.

7. The method according to claim 6, wherein the method further comprises:
if the first device can serve as the positioning reference unit or the positioning reference device, storing, by the access management network element, the second information into the information about the first device; or
if the first device cannot serve as the positioning reference unit or the positioning reference device, sending, by the access management network element, third information to the first device, wherein the third information is used to notify that the first device cannot serve as the positioning reference unit or the positioning reference device.

8. The method according to any one of claims 1 to 7, wherein the second message further comprises a network function update request or a network function registration request.

9. The method according to any one of claims 2 to 8, wherein the first message further comprises location information of the first device.

10. The method according to claim 9, wherein the method further comprises:
if the access management network element determines that the location information of the first device meets a first condition, storing, by the access management network element, the location information of the first device into the information about the first device.

11. The method according to any one of claims 2 to 8, wherein the method further comprises:
sending, by the access management network element, a third message to a second network element, wherein the third message is used to request to obtain location information of the first device; and
storing, by the access management network element, the location information of the first device into the information about the first device.

12. The method according to any one of claims 1 to 11, wherein the access management network element obtains one or more first devices from a unified data management network element.

13. The method according to any one of claims 1 to 12, wherein the method further comprises:
sending, by the access management network element, a ninth message to the first device, wherein the ninth message is used by the first device to perform positioning measurement.

14. A communication method, wherein the method comprises:
receiving, by a network storage network element, a fourth message sent by a second network element, wherein the fourth message is used to discover an access management network element, or the fourth message is used to discover a first device, wherein
the fourth message comprises fifth information, and the fifth information indicates that the first device exists in the discovered access management network element; or
the fourth message comprises fourth information, and the fourth information indicates that a type of a discovered network function is the first device; and
sending, by the network storage network element, one or more access management network elements to the second network element; or sending, by the network storage network element, one or more first devices to the second network element.

15. The method according to claim 14, wherein the fourth message further comprises information about a reference area of a second device.

16. The method according to claim 14 or 15, wherein
the fifth information indicates that the access management network element is an access management network element that comprises the first device in the reference area of the second device.

17. The method according to any one of claims 14 to 16, wherein
the fourth message further comprises sixth information, and the sixth information indicates that the first device is a first device that exists in the reference area of the second device.

18. The method according to any one of claims 15 to 17, wherein the first device comprises a positioning reference unit or a positioning reference device, and the second device comprises a positioned device.

19. The method according to any one of claims 14 to 18, wherein the fourth message comprises one or more of a network function discovery request, a network function list retrieval, and a network function profile retrieval.

20. The method according to any one of claims 14 to 19, wherein the method further comprises:
receiving, by the network storage network element, a second message sent by the access management network element, wherein the second message comprises first information, and the first information indicates that the first device exists in the access management network element, the first information is used to register information about the first device with the network storage network element, or the first information indicates that a type of a network function is the first device, wherein the first device is used for positioning measurement.

21. The method according to claim 20, wherein the second message further comprises information about a reference area of the first device.

22. The method according to claim 20 or 21, wherein the method further comprises:
the first information indicates that the access management network element comprises the first device in the reference area of the first device.

23. A communication method, wherein the method comprises:
sending, by a first device, a first message to an access management network element, wherein the first message comprises second information, and the second information indicates a capability of the first device; and
receiving, by the first device, a ninth message sent by the access management network element, wherein the ninth message is used by the first device to perform positioning measurement.

24. The method according to claim 23, wherein the first device comprises a positioning reference unit or a positioning reference device.

25. The method according to claim 23 or 24, wherein the first message further comprises location information of the first device.

26. The method according to any one of claims 23 to 25, wherein the method further comprises:
if the first device cannot serve as the positioning reference unit or the positioning reference device, receiving, by the first device, third information sent by the access management network element, wherein the third information is used to notify that the first device cannot serve as the positioning reference unit or the positioning reference device.

27. A communication method, wherein the method comprises:
sending, by a second network element, a fourth message to a network storage network element, wherein the fourth message is used to discover an access management network element, or the fourth message is used to discover a first device, wherein
the fourth message comprises fifth information, and the fifth information indicates that the first device exists in the discovered access management network element; or
the fourth message comprises fourth information, and the fourth information indicates that a type of a discovered network function is the first device; and
receiving, by the second network element, one or more access management network elements sent by the network storage network element; or receiving, by the second network element, one or more first devices sent by the network storage network element.

28. The method according to claim 27, wherein the method further comprises:
receiving, by the second network element, a fifth message, wherein the fifth message is used to request to position a second device, is used to request to obtain location information of the second device, or is used to request to determine a location of the second device.

29. The method according to claim 27 or 28, wherein the fourth message further comprises information about a reference area of the second device.

30. The method according to any one of claims 27 to 29, wherein
the fifth information indicates that the access management network element is an access management network element that comprises the first device in the reference area of the second device.

31. The method according to any one of claims 27 to 29, wherein
the fourth message further comprises sixth information, and the sixth information indicates that the first device is a first device that exists in the reference area of the second device.

32. The method according to any one of claims 27 to 31, wherein the first device comprises a positioning reference unit or a positioning reference device, and the second device comprises a positioned device.

33. The method according to any one of claims 27 to 32, wherein the fourth message comprises one or more of a network function discovery request, a network function list retrieval, and a network function profile retrieval.

34. A communication apparatus, comprising a module configured to perform the method according to any one of claims 1 to 13, 14 to 22, 23 to 26, or 27 to 33.

35. A communication apparatus, comprising a processor and an interface circuit, wherein the interface circuit is configured to: receive a signal from a communication apparatus other than the communication apparatus and transmit the signal to the processor, or send a signal from the processor to the communication apparatus other than the communication apparatus; and the processor is configured to implement the method according to any one of claims 1 to 13, 14 to 22, 23 to 26, or 27 to 33 by using a logic circuit or executing code instructions.

36. A computer-readable storage medium, wherein the storage medium stores a program or instructions, and when the program or the instructions are run, the method according to any one of claims 1 to 13, 14 to 22, 23 to 26, or 27 to 33 is implemented.
